# EUROPEAN PATENT APPLICATION

(11) **EP 4 275 467 A1**
(43) Date of publication of application: **15.11.2023**
(21) Application number: 21917629.4
(22) Date of filing: 10.12.2021
(51) Int. Cl.: A01B 69/00, A01B 69/02, A01C 11/02

(54) **TRAVEL ASSISTANCE SYSTEM FOR AGRICULTURAL MACHINE**

(30) Priority: 05.01.2021 JP 2021000505
(71) Applicant: KUBOTA CORPORATION, Osaka-shi, Osaka 556-8601 (JP)
(72) Inventor: ISHIKAWA Shinnosuke, Sakai-shi, Osaka 590-0823 (JP); TAMATANI Kenji, Sakai-shi, Osaka 590-0823 (JP); KIKUCHI Ryota, Sakai-shi, Osaka 590-0823 (JP)
(74) Representative: Müller-Boré & Partner Patentanwälte PartG mbB
(86) International application number: PCT/JP2021/045549
(87) International publication number: WO 2022/149408

(57) **Abstract**

A traveling assistance system (S) for an agricultural machine (1) includes: a position detector (40) to detect a position of an agricultural machine (1); a criterion creator (53j) to create a determination criterion (X) located forward of the agricultural machine (1) for determination about a turn of the agricultural machine (1); an area identifier (53l) to identify a first area (e1) and a second area (e2), the first area (e1) being an area in which the agricultural machine (1) travels in a predetermined circumferential direction and the working device (2) performs work, the second area (e2) being an area which is a portion of an agricultural field (H), which is adjacent to the first area (e1), and in which entry of the agricultural machine (1) is prohibited in advance; and a first setter (53m) to, in a case where the determination criterion (X) is located in the second area (e2), set a first turning portion (CR1) at a position in the first area (e1) and between the agricultural machine (1) and the second area (e2), the first turning portion (CR1) being a portion in which the agricultural machine (1) makes a turn.

## Description

### Technical Field

The present invention relates to a traveling assistance system for an agricultural machine such as a tractor.

### Background Art

As disclosed in Patent Literature 1, when a known agricultural machine to which a transplanter is attached as a working device performs planting work in an agricultural field, the agricultural machine travels back and forth and performs planting in an inner area with a headland of the agricultural field left unplanted and then travels and performs planting in the headland surrounding the inner area.

### Citation List

### Patent Literature

PTL 1: Japanese Unexamined Patent Application Publication No. 2006-204174

### Summary of Invention

### Technical Problem

However, depending on the direction in which the agricultural machine goes around, the direction in which the agricultural machine turns, and a course along which the agricultural machine goes around, there is a risk that the agricultural machine might enter an area in which the entry of the agricultural machine is prohibited in advance, such as an area where transplanting work has already been completed (plowed area), resulting in roughening the plowed area.

The present invention has been made to solve such problems of related art described above. An object of the present invention is to provide a traveling assistance system that enables an agricultural machine to go around in an agricultural field and perform work efficiently while preventing the agricultural machine from traveling in an area where the agricultural machine is prohibited from entering.

### Solution to Problem

A traveling assistance system for an agricultural machine according to an aspect of the present invention includes: a position detector to detect a position of an agricultural machine to which a working device is attachable; a criterion creator to, based on the position of the agricultural machine detected by the position detector, create a determination criterion located forward of the agricultural machine for determination about a turn of the agricultural machine; an area identifier to identify a first area and a second area, the first area being an area which is a first portion of an agricultural field and in which the agricultural machine travels in a predetermined circumferential direction and the working device performs work, the second area being an area which is a second portion of the agricultural field, which is adjacent to the first area, and in which entry of the agricultural machine is prohibited in advance; and a first setter to, in a case where the determination criterion is located in the second area, set a first turning portion at a position in the first area and between the agricultural machine and the second area, the first turning portion being a portion in which the agricultural machine makes a turn.

The determination criterion is an imaginary line extending forward of the agricultural machine from the position of the agricultural machine detected by the position detector. In a case where a first boundary which is a boundary between the first area and the second area intersects with the imaginary line, the first setter sets the first turning portion at a position in the first area and between the agricultural machine and the second area.

The area identifier identifies the first area, the second area, and a third area which is a third portion of the agricultural field, which is adjacent to the first area, and in which the entry of the agricultural machine is permitted in advance. In a case where the determination criterion is located in the third area, the first setter sets a second turning portion at a position in the third area and forward of the agricultural machine, the second turning portion being a portion in which the agricultural machine makes a turn.

The determination criterion is an imaginary line extending forward of the agricultural machine from the position of the agricultural machine detected by the position detector. In a case where a first boundary which is a boundary between the first area and the second area intersects with the imaginary line, the first setter sets the first turning portion at a position in the first area and between the agricultural machine and the second area, and in a case where a second boundary which is a boundary between the first area and the third area intersects with the imaginary line, the first setter sets the second turning portion at a position in the third area and forward of the agricultural machine.

A length of the imaginary line from a front of the agricultural machine to a distal end of the imaginary line is approximately twice as large as a work width of the working device.

The second area is an area where, in the agricultural field, the working device has completed work.

The traveling assistance system further includes: a position acquirer to acquire a plurality of position measurement points of the agricultural machine detected by the position detector; a display to display a field that represents the agricultural field and display a plurality of creation points based on the position measurement points on the field; and a line creator to create a traveling line including a loop which passes through the plurality of creation points. The line creator includes a line creator to create a plurality of connection lines each of which is a straight line connecting adjacent ones of the plurality of creation points on the traveling line, and a second setter to: extract, from the plurality of connection lines, a predetermined pair of connection lines adjacent to each other and extending in different directions and defining an angle not less than a criterion value, and set, at one of the creation points that is shared by the extracted predetermined pair of connection lines, a multipoint-turn portion where the agricultural machine performs a multipoint turn.

The criterion creator creates the determination criterion at a position that is forward of the agricultural machine and outward of an outer periphery of a turning trajectory of the agricultural machine.

An agricultural machine includes the traveling assistance system for an agricultural machine.

### Advantageous Effects of Invention

The above traveling assistance system for the agricultural machine enables the agricultural machine to travel around in the agricultural field and perform work efficiently while preventing the agricultural machine from traveling in an area where the agricultural machine is prohibited from entering.

### Brief Description of Drawings

[FIG. 1] FIG. 1 is a block diagram of a traveling assistance system for an agricultural machine.
[FIG. 2] FIG. 2 illustrates a lifting device.
[FIG. 3] FIG. 3 is a diagram for explaining automatic traveling of the agricultural machine.
[FIG. 4] FIG. 4 illustrates an example of a field registration screen D1.
[FIG. 5A] FIG. 5A illustrates how to determine a contour of an agricultural field from position measurement points.
[FIG. 5B] FIG. 5B illustrates how to determine the contour of the agricultural field from turning points.
[FIG. 5C] FIG. 5C illustrates how to determine the contour of the agricultural field from end portions of the agricultural field.
[FIG. 6A] FIG. 6A illustrates a prepared traveling line and unit work zones.
[FIG. 6B] FIG. 6B is a diagram for explaining an inner line.
[FIG. 6C] FIG. 6C illustrates a traveling line and a unit work zone that are different from those of FIG. 6A.
[FIG. 7] FIG. 7 illustrates an example of a setting screen D2.
[FIG. 8] FIG. 8 is a diagram for explaining generation of creation points.
[FIG. 9] FIG. 9 is a diagram for explaining setting of creation points.
[FIG. 10] FIG. 10 is a diagram for explaining a determination criterion (imaginary line).
[FIG. 11A] FIG. 11 A is a first diagram for explaining setting of a first turning portion.
[FIG. 11B] FIG. 11B is a second diagram for explaining setting of the first turning portion.
[FIG. 12A] FIG. 12 A is a first diagram for explaining work performed by a working device when the agricultural machine moves at the first turning portion.
[FIG. 12B] FIG. 12B is a second diagram for explaining work performed by the working device when the agricultural machine moves at the first turning portion.
[FIG. 13A] FIG. 13A is a first diagram for explaining setting of a second turning portion.
[FIG. 13B] FIG. 13B is a second diagram for explaining setting of the second turning portion.
[FIG. 14] FIG. 14 is a diagram for explaining work performed by the working device when the agricultural machine moves at the second turning portion.
[FIG. 15A] FIG. 15A is a diagram for explaining a case where a second setter does not set a multipoint-turn portion.
[FIG. 15B] FIG. 15B is a diagram for explaining a case where the second setter sets the multipoint-turn portion.
[FIG. 16] FIG. 16 is a general side view of the agricultural machine.
[FIG. 17] FIG. 17 is a block diagram of an agricultural machine according to a variation.

### Description of Embodiments

Embodiments of the present invention will now be explained while referring to the drawings.

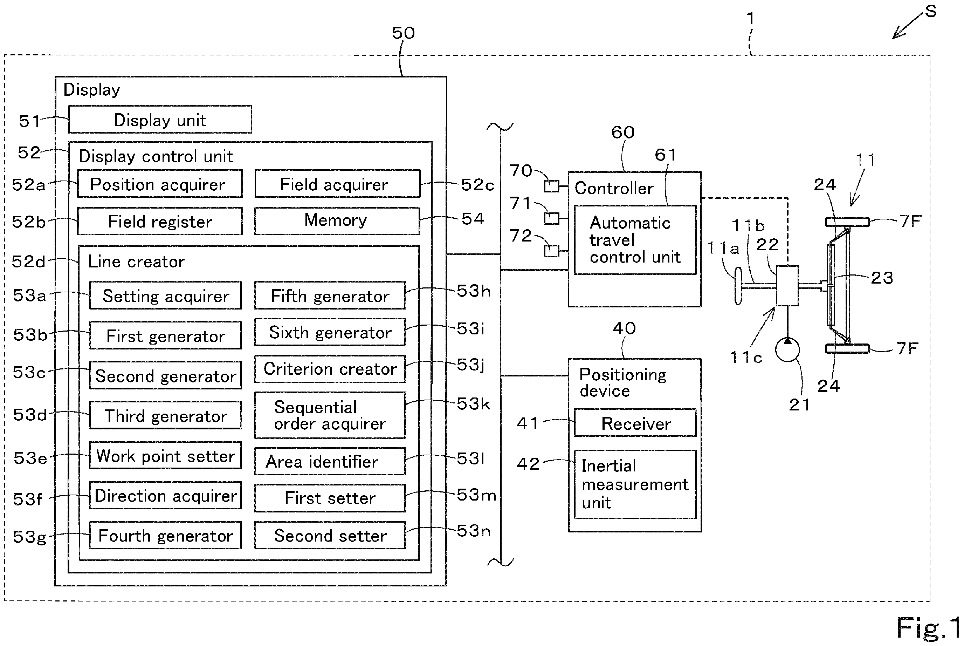

FIG. 1 is a block diagram of a traveling assistance system S for an agricultural machine 1, wherein said system assists the traveling of the agricultural machine 1 when the agricultural machine 1 performs work while traveling around in an agricultural field H. In the present embodiment, the traveling assistance system S for the agricultural machine 1 generates a traveling line L which includes loop(s) in the agricultural field H and which makes it possible to perform work efficiently while avoiding entry into an area e2 where the agricultural machine 1 is prohibited from entering. Based on the traveling line L generated by the traveling assistance system S, the agricultural machine 1 travels around in the agricultural field H.

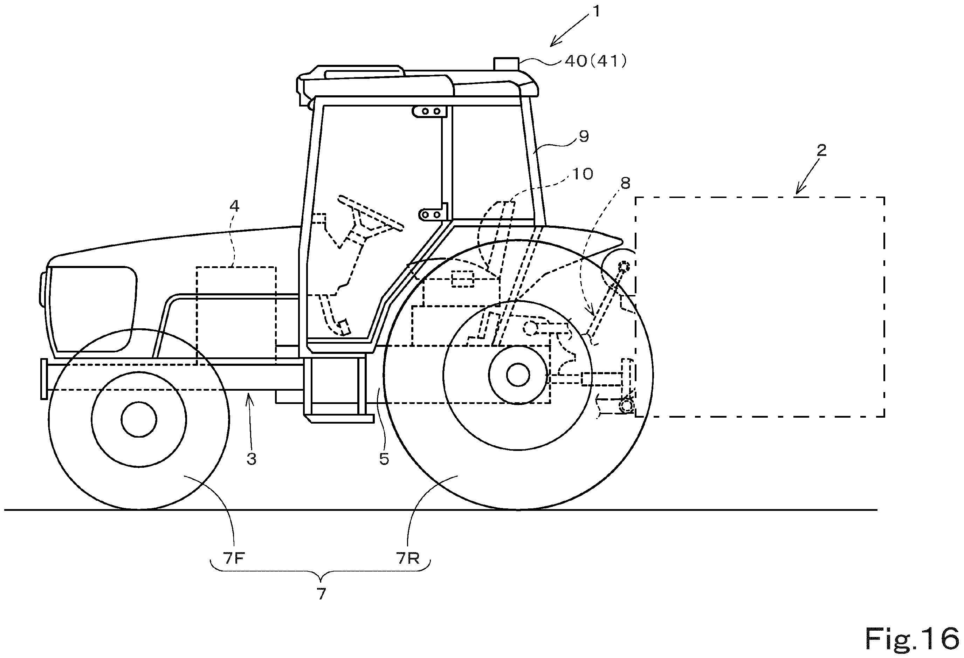

First, the agricultural machine 1 will now be explained. The agricultural machine 1 is a machine to which a working device 2 can be attached, for example, a tractor, a rice transplanter, or the like as illustrated in FIG. 16. In the description below, a traveling assistance system S for the agricultural machine 1 of the present embodiment is described using a tractor as an example of the agricultural machine 1. As illustrated in FIG. 16, the tractor 1 includes a traveling vehicle 3, a prime mover 4, and a transmission 5. The traveling vehicle 3 includes a traveling device 7. The traveling device 7 is a device including front wheels 7F and rear wheels 7R. The front wheels 7F may be of a tire type or a crawler type. The rear wheels 7R may also be of a tire type or a crawler type. The prime mover 4 is a diesel engine, an electric motor, or the like. The transmission 5 is capable of switching a propelling force of the traveling device 7 by shifting gears and is also capable of switching the traveling device 7 between forward traveling and rearward traveling. A cabin 9 is provided on the traveling vehicle 3. An operator's seat 10 is provided inside the cabin 9.

As illustrated in FIG. 16, a lifting device 8 that includes a three-point linkage and the like is provided at a rear portion of the traveling vehicle 3. The working device 2 can be detachably attached to the lifting device 8. Coupling the working device 2 to the lifting device 8 enables the traveling vehicle 3 to tow the working device 2. The working device 2 is, for example, a cultivator for cultivation, a fertilizer spreader for spreading a fertilizer, an agricultural chemical spreader for spreading an agricultural chemical, a harvester for harvesting crops, a mower for cutting grass and the like, a tedder for spreading out grass and the like, a rake for collecting grass and the like, or a baler for baling grass and the like.

As illustrated in FIG. 1, the tractor 1 includes a steering device 11. The steering device 11 includes a steering wheel 11a, a rotation shaft (steering shaft) 11b that rotates with rotation of the steering wheel 11a, and an assist mechanism (power steering mechanism) 11c that assists steering of the steering wheel 11a. The assist mechanism 11c includes a hydraulic pump 21, a control valve 22 to which a hydraulic fluid delivered from the hydraulic pump 21 is supplied, and a steering cylinder 23 that is operated by the control valve 22. The control valve 22 is a solenoid valve that is activated based on a control signal. The control valve 22 is, for example, a three-position switching valve that can be switched by the movement of a spool or the like. The control valve 22 can be switched also by the steering of the steering shaft 11b. The steering cylinder 23 is connected to arms (knuckle arms) 24 configured to change the direction of the front wheels 7F.

Accordingly, when the steering wheel 11a is operated, the switching position and the opening of the control valve 22 are switched in accordance with the steering wheel 11a, and the steering cylinder 23 extends or retracts to the left or right in accordance with the switching position and opening of the control valve 22. By this means, it is possible to change the steering direction of the front wheels 7F. The steering device 11 described above is a mere example, and its configuration is not limited to the configuration described above.

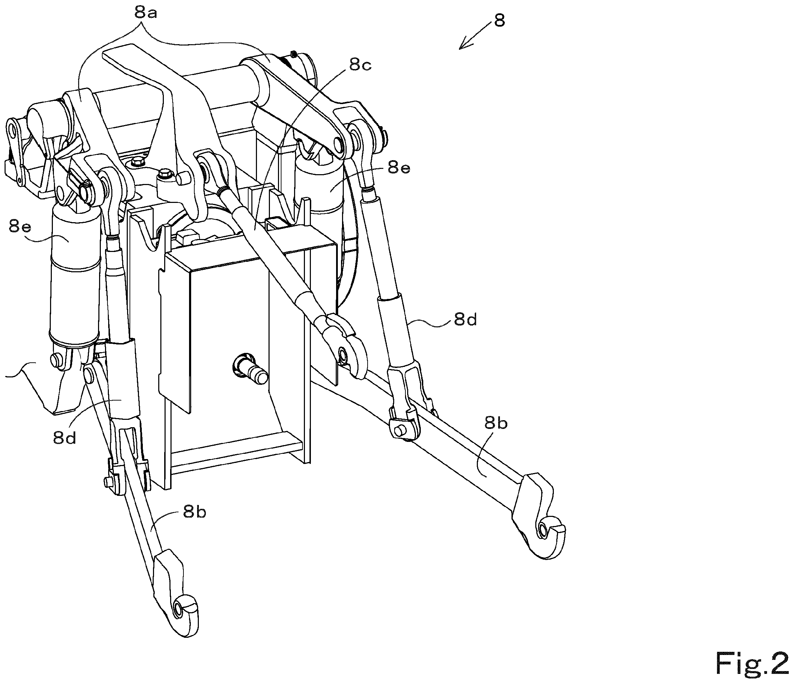

As illustrated in FIG. 2, the lifting device 8 includes lift arm(s) 8a, lower link(s) 8b, a top link 8c, lift rod(s) 8d, and lift cylinder(s) 8e. The front end portions of the lift arms 8a are supported in such a way as to be able to move pivotally upward/downward on rear upper portions of a case (transmission case) in which the transmission 5 is housed. The lift arms 8a move pivotally (are raised and lowered) when driven by the lift cylinders 8e. The lift cylinders 8e are hydraulic cylinders. The lift cylinders 8e are connected to a hydraulic pump 21 through a control valve 22. The control valve 22 is a solenoid valve or the like and causes the lift cylinders 8e to extend and retract.

The front end portions of the lower links 8b are supported in such a way as to be able to move pivotally upward/downward on rear lower portions of the transmission 5. The front end portion of the top link 8c is supported in such a way as to be able to move pivotally upward/downward behind the transmission 5 above the lower links 8b. The lift rods 8d link the lift arms 8a to the lower links 8b. The working device 2 is coupled to the rear portions of the lower links 8b and the rear portion of the top link 8c. When the lift cylinders 8e are driven (to extend or retract), the lift arms 8a are raised or lowered, and the lower links 8b, which are linked to the lift arms 8a via the lift rods 8d, are raised or lowered. With this, the lifting device 8 is capable of switching between a non-work attitude in which the working device 2 is pivoted upward around the front portions of the lower links 8b and a work attitude in which the working device 2 is pivoted downward around the front portions of the lower links 8b.

As illustrated in FIG. 1, the tractor 1 includes a position detector (positioning device) 40. The position detector 40 is capable of detecting its position (measured position information including latitude and longitude) by using a satellite positioning system (positioning satellites) such as D-GPS, GPS, GLONASS, BeiDou, Galileo, Michibiki, or the like. That is, the position detector 40 receives satellite signal(s) (positions of the positioning satellites, transmission times, correction information, etc.) transmitted from the positioning satellites, and detects the position (for example, latitude and longitude) of the tractor 1, namely, a vehicle-body position VP, based on the satellite signals. The position detector 40 includes a receiver 41 and an inertial measurement unit (IMU) 42. The receiver 41 is a device including an antenna and the like and configured to receive satellite signals transmitted from the positioning satellites. The receiver 41 is mounted on the traveling vehicle 3 separately from the inertial measurement unit 42. In the present embodiment, the receiver 41 is mounted on the traveling vehicle 3, specifically, on the cabin 9. The position where the receiver 41 is mounted is not limited to the position described in the above embodiment.

The inertial measurement unit 42 includes an acceleration sensor that detects an acceleration, a gyroscope sensor that detects an angular speed, and the like. The inertial measurement unit 42 is disposed in the traveling vehicle 3, for example, below the operator's seat 10, and is capable of detecting a roll angle, a pitch angle, a yaw angle, and the like of the traveling vehicle 3.

As illustrated in FIG. 1, the tractor 1 includes a controller 60. The controller 60 is a device that controls a traveling system, a working system, and the like in the tractor 1.

The controller 60 includes an automatic travel control unit 61 that controls automatic traveling of the tractor 1. The automatic travel control unit 61 includes electric/electronic circuit(s) provided in the controller 60, program(s) stored in a CPU, etc., and/or the like. Upon start of automatic traveling, the automatic travel control unit 61 controls the control valve 22 of the steering device 11 such that the traveling vehicle 3 travels along a planned travel route L that has been set in advance. Moreover, upon start of automatic traveling, the automatic travel control unit 61 controls the velocity (vehicle speed) of the tractor 1 by automatically changing the gear-shift position of the transmission 5, the number of revolutions of the prime mover 4, and the like.

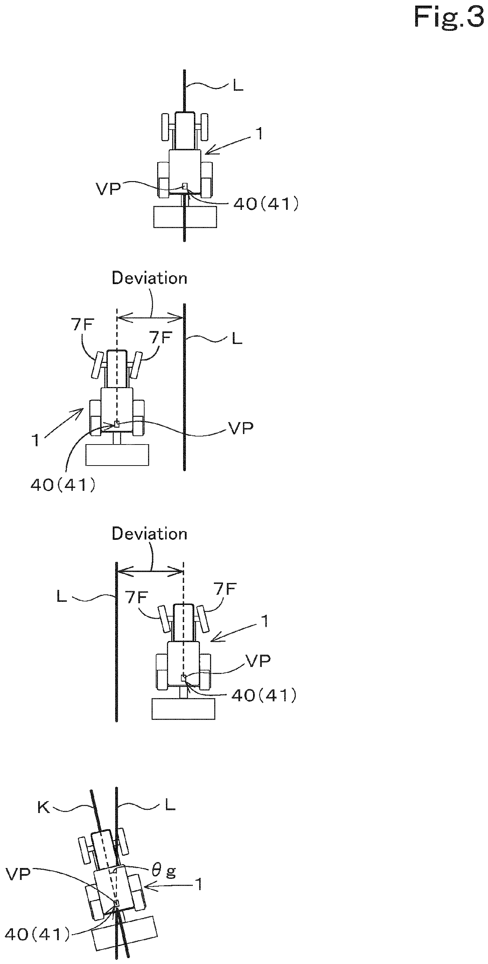

As illustrated in FIG. 3, in a situation where the tractor 1 is traveling automatically, if a deviation of the vehicle-body position VP from the planned travel route L is less than a threshold value, the automatic travel control unit 61 keeps the rotation angle of the steering shaft (rotation shaft) 11b. If the deviation of the vehicle-body position VP from the planned travel route L is not less than the threshold value and, in addition, the tractor 1 is located to the left of the planned travel route L, the automatic travel control unit 61 causes the steering shaft 11b to rotate so as to steer the tractor 1 to the right. If the deviation of the vehicle-body position VP from the planned travel route L is not less than the threshold value and, in addition, the tractor 1 is located to the right of the planned travel route L, the automatic travel control unit 61 causes the steering shaft 11b to rotate so as to steer the tractor 1 to the left.

In the embodiment described above, the steering angle of the steering device 11 is changed based on the deviation of the vehicle-body position VP from the planned travel route L. However, in a case where the azimuth (vehicle-body azimuth) K of the direction in which the tractor 1 (the traveling vehicle 3) is headed (the traveling direction) is different from the azimuth of the planned travel route L, that is, if the angle θg of the vehicle-body azimuth K relative to the planned travel route L is not less than a threshold value, the automatic travel control unit 61 may set the steering angle such that the angle θg will become zero (the vehicle-body azimuth K will match the azimuth of the planned travel route L). The automatic travel control unit 61 may, based on a steering angle calculated based on the position (position deviation) and a steering angle calculated based on the azimuth (azimuth deviation), set a final steering angle in automatic steering. The setting of the steering angle in automatic steering according to the embodiment described above is a mere example and is not limited thereto.

The tractor 1 (the traveling vehicle 3) is capable of traveling automatically while being controlled by the controller 60 as described above.

The controller 60 is capable of performing manual raising and lowering control of the lifting device 8, automatic raising and lowering control of the lifting device 8, and the like. In the manual raising and lowering control, based on an operation of a raising/lowering switch 72 connected to the controller 60, the lifting device 8 is controlled to raise or lower the working device 2. Specifically, the raising/lowering switch 72 is a three-position selector switch provided near the operator's seat 10. When the raising/lowering switch 72 is switched from a neutral position to one side, a raising signal for moving the lifting device 8 (the lift arms 8a) up is inputted into the controller 60. When the raising/lowering switch 72 is switched from the neutral position to the other side, a lowering signal for moving the lifting device 8 (the lift arms 8a) down is inputted into the controller 60. Upon acquiring the raising signal, the controller 60 outputs a control signal to the control valve 22 to move the lifting device 8 up. Upon acquiring the lowering signal, the controller 60 outputs a control signal to the control valve 22 to move the lifting device 8 down. That is, the controller 60 is capable of performing manual raising and lowering control for moving the lifting device 8 up/down in accordance with a manual operation of the raising/lowering switch 72.

In the automatic raising and lowering control, if the steering angle of the steering device 11 is not less than a predetermined value, for example, if the steering angle of the steering device 11 is a steering angle corresponding to making a turn, the lifting device 8 is automatically activated to raise the working device 2. Specifically, a steering angle detector 70 and a selector switch 71 are connected to the controller 60. The steering angle detector 70 is a device that detects the steering angle of the steering device 11. The selector switch 71 is a switch for switching the automatic raising and lowering control between "enabled" and "disabled". The selector switch 71 is switchable between ON and OFF. The automatic raising and lowering control is set to be enabled when the selector switch 71 is ON. The automatic raising and lowering control is set to be disabled when the selector switch 71 is OFF.

If the automatic raising and lowering control is enabled and, in addition, the steering angle detected by the steering angle detector 70 is not less than the steering angle corresponding to making a turn, the controller 60 outputs a control signal to the control valve 22, thus performing the automatic raising and lowering control for moving the lifting device 8 up automatically.

As described above, the controller 60 is capable of performing control related to the tractor 1, for example, the manual raising and lowering control and the automatic raising and lowering control. The automatic travel control unit 61 (the controller 60) may cause the lifting device 8 to move up/down in accordance with the planned traveling route L. In this case, the planned traveling route L includes information about lifting of the lifting device 8. Based on this information, the automatic travel control unit 61 causes the lifting device 8 to be at the down position on a path along which the tractor 1 travels straight and be at the up position on a path along which the tractor 1 makes a turn.

As illustrated in FIG. 1, the traveling assistance system S for the tractor 1 includes a display 50, a position acquirer 52a, a field register 52b, and a field acquirer 52c.

The display 50 is a traveling assisting device provided near the operator's seat 10. The display 50 includes a display unit 51, a display control unit 52, and a memory 54. The display unit 51 is a liquid crystal panel, a touch panel, or other kind of panel. The display unit 51 is capable of displaying a field F that represents an agricultural field H. Besides information for providing assistance for traveling of the tractor 1, the display unit 51 is capable of displaying various kinds of information regarding the tractor 1 and the working device 2. The display control unit 52 includes electric/electronic component(s) provided in the display 50, program(s) stored in the memory 54 mentioned below, and/or the like. The display control unit 52 causes the display unit 51 to display a screen that is visualization of information stored in the memory 53. The memory 54 is a non-volatile memory or the like. The memory 54 stores various kinds of information regarding the tractor 1 and the working device 2. The display 50 is connected to devices of the tractor 1 such that wired communication or wireless communication can be performed therebetween. The display 50 is capable of transmitting information to the devices and receiving information from the devices. Specifically, for example, the display control unit 52 of the display 50 is connected to the controller 60 of the working machine such that communication can be performed therebetween.

As illustrated in FIG. 1, the position acquirer 52a, the field register 52b, and the field acquirer 52c each include electric/electronic component(s), program(s) installed in the display 50, and/or the like. In the present embodiment, the display control unit 52 of the display 50 functions also as the position acquirer 52a, the field register 52b, and the field acquirer 52c. Though the display control unit 52 of the display 50 functions also as the position acquirer 52a, the field register 52b, and the field acquirer 52c in the present embodiment, an external server, etc. capable of communicating with the display 50 may include the position acquirer 52a, the field register 52b, and the field acquirer 52c, and the configuration thereof is not limited to the configuration described above.

The position acquirer 52a acquires a plurality of position measurement points Pk (k: each position measurement point Pk, k = 1, 2, 3, ..., k) obtained when the tractor 1 makes a round in the agricultural field H. Specifically, based on positions of the tractor 1 detected by the position detector 40 (vehicle-body positions VP), the position acquirer 52a acquires a plurality of position measurement points Pk obtained when the tractor 1 makes a round in the agricultural field H. In the present embodiment, the position acquirer 52a is capable of acquiring vehicle-body positions VP including a plurality of position measurement points Pk obtained when the tractor 1 makes a round in the agricultural field H. It is sufficient as long as the position acquirer 52a is capable of acquiring a plurality of position measurement points Pk. The position acquirer 52a may be configured to acquire position information of the plurality of position measurement points Pk from a storage device such as a memory in which the position information of the plurality of position measurement points Pk is stored. The method for acquisition is not limited to the method described above.

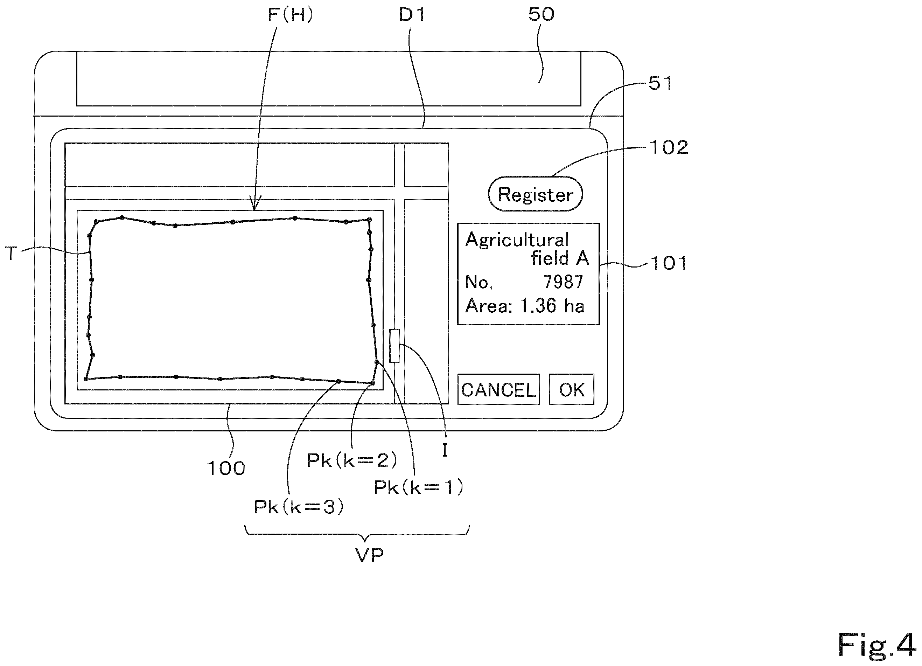

The field register 52b registers a contour C1 of a particular agricultural field H, for example, positions corresponding to the contour C1 of the particular agricultural field H, as the field F displayed on the display unit 51. As illustrated in FIG. 4, when the operator performs a predetermined operation on the display 50, the display control unit 52 displays a field registration screen D1 on the display unit 51. A field display section 100, which shows the field F including the agricultural field H and vehicle-body position(s) VP of the tractor 1, and an information display section 101, which shows agricultural field identification information such as the name of the agricultural field H (agricultural field name) and an agricultural field management number, are displayed on the field registration screen D1. Position information such as latitude and longitude, besides image data representing the agricultural field H, is associated with the field F. When the tractor 1 enters the agricultural field H and makes a round in the agricultural field H, based on the position information acquired by the position acquirer 52a from the position detector 40, the display control unit 52 displays the current vehicle-body positions VP of the tractor 1 making a round on the field registration screen D1.

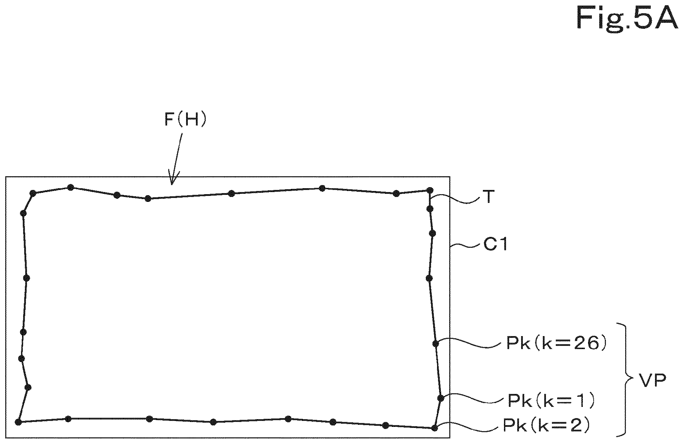

When the tractor 1 finishes making a round in the agricultural field H and the operator selects a Register button 102 displayed on the field registration screen D1, as illustrated in FIG. 5A, based on a travel trajectory T obtained from the position information of a plurality of position measurement points Pk acquired by the position acquirer 52a (the vehicle-body positions VP), the field register 52b creates the contour (outline) C1 of the agricultural field H and registers, together with the agricultural field identification information, the field F represented by the contour C1. Specifically, the memory 54 stores the field F indicating the contour (outline) C1 registered by the field register 52b. That is, the memory 54 stores the field F, which is data indicating the contour C1 of the agricultural field H (data for representation of the predetermined agricultural field H).

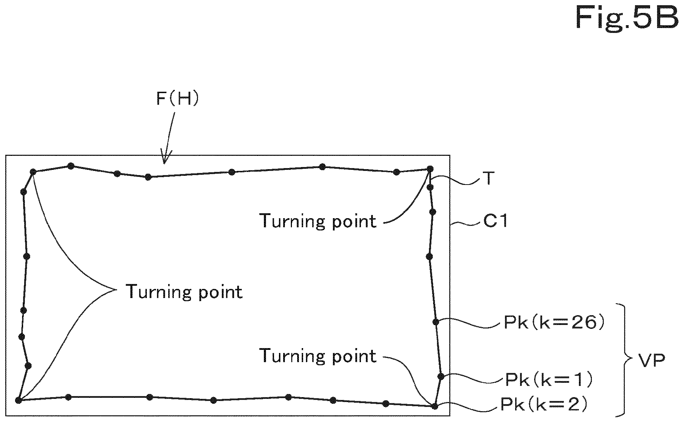

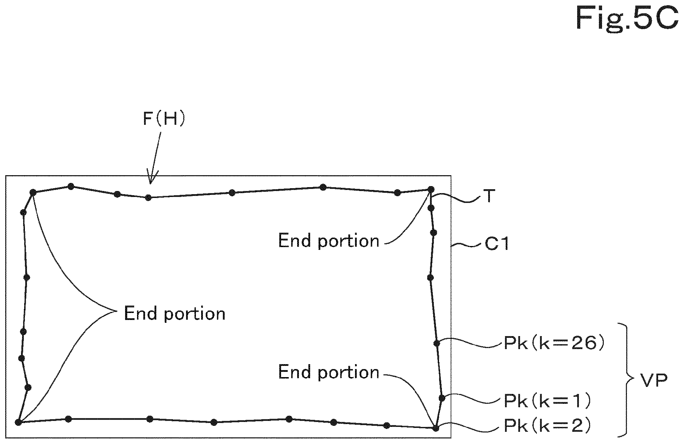

For the sake of description, the contour C1 may be hereinafter referred to as "outer borderline". As illustrated in FIG. 5B, the field register 52b may calculate turning points from the travel trajectory T represented by the vehicle-body positions VP and register the contour C1 connecting the turning points as the field F for the agricultural field H. As illustrated in FIG. 5C, the operator, etc. may designate end portions of the agricultural field H by operating a switch, etc. provided on the tractor 1 when the tractor 1 is making a round, and the field register 52b may register, as the field F, the contour C1 that is based on the designated end portions. The field register 52b may be configured to acquire information of the field F from a storage device such as a memory in which the information of the field F including the agricultural field H is stored, and then register the agricultural field H. The methods for registration of the agricultural field H described above are mere examples and are not limited thereto. The contour C1 of the agricultural field H, that is, the field F, may be data represented by positions (latitude and longitude), may be data represented using a coordinate system (X axis, Y axis), and may be data represented in some other manner.

As described above, the display 50 is capable of causing the field register 52b to register a plurality of fields F. The field acquirer 52c acquires a field F representing a particular agricultural field H among the plurality of fields F when work, etc. is to be performed.

When the operator performs a predetermined operation on the display 50, the field acquirer 52c displays a predetermined field selection screen (not illustrated) on the display unit 51 of the display 50. Maps of the agricultural fields H stored in the memory 54 are, or a list of the agricultural fields H is, displayed on the field selection screen. The operator is able to, for example, select one agricultural field H from among the plurality of agricultural fields H displayed on the field selection screen by performing a predetermined operation on the display 50. When the one agricultural field H is selected, the field acquirer 52c looks up the memory 54 and acquires the field F that corresponds to the selected agricultural field H.

The traveling assistance system S for the tractor 1 is capable of creating travel line(s) L along which the tractor 1 makes a round in the agricultural field H. In the present embodiment, the tractor 1 performs automatic traveling along this travel line L as a planned travel route L. In the present embodiment, it is sufficient as long as the travel line L functions as a route along which the tractor 1 makes a round in the agricultural field H. The tractor 1 may be manually operated to travel along the travel line L.

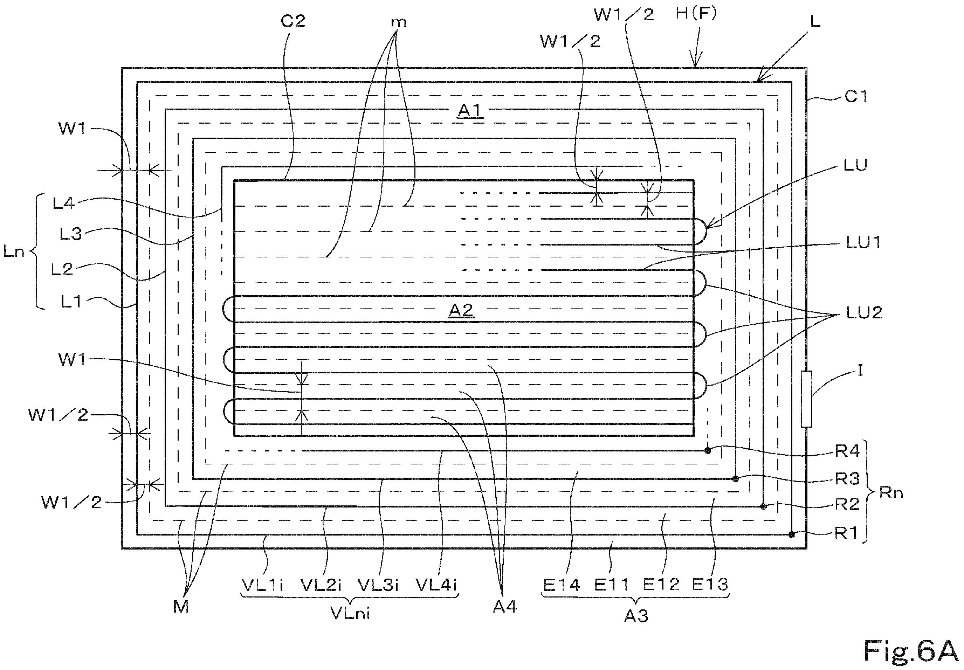

Specifically, as illustrated in FIG. 1, the traveling assistance system S for the tractor 1 includes a line creator 52d. The line creator 52d creates, as illustrated in FIG. 6A, headland work lines Ln (n: headland number (loop number); n = 1, 2, 3, ..., n) for performing work on headlands (headland area) A1 of the agricultural field H. It is sufficient as long as the line creator 52d creates at least the traveling line L along which the tractor 1 travels around in the agricultural field H. In the present embodiment, in addition to loop lines (headland work lines) Ln which are the traveling lines L for going around in the agricultural field H, the line creator 52d is capable of creating an inner line LU, which is the traveling line L located inside the headland area A1 (located in an inner area A2). The line creator 52d includes, for example, electric/electronic component(s), program(s) installed in the display 50, and/or the like. In the present embodiment, the display control unit 52 of the display 50 serves also as the line creator 52d.

Though the display control unit 52 of the display 50 serves also as the line creator 52d in the present embodiment, an external server, etc. capable of communicating with the display 50 may include the line creator 52d, and the configuration thereof is not limited to the configuration described above.

As illustrated in FIG. 6A, the loop lines Ln are travel lines L along each of which the tractor 1 makes a round in the headland area A1, and the number of paths corresponds to the number of headlands A1 in the agricultural field H. That is, if the number of headlands is four, as illustrated in FIG. 6A, the paths of the loop lines Ln are four paths located adjacent to each other in a direction from the central portion of the field F outward. If the number of headlands is five, the paths of the loop lines Ln are five paths adjacent to each other in the direction from the central portion of the field F outward.

In the description below, terms "first loop line L1", "second loop line L2", "third loop line L3", ..., and "n-th loop line Ln" (n = 1, 2, 3, ..., n) counted in order from the outermost loop line Ln toward the innermost loop line Ln will be used for the loop lines Ln. In FIG. 6A, portions of the fourth loop line L4 that overlap the inner line LU is not illustrated.

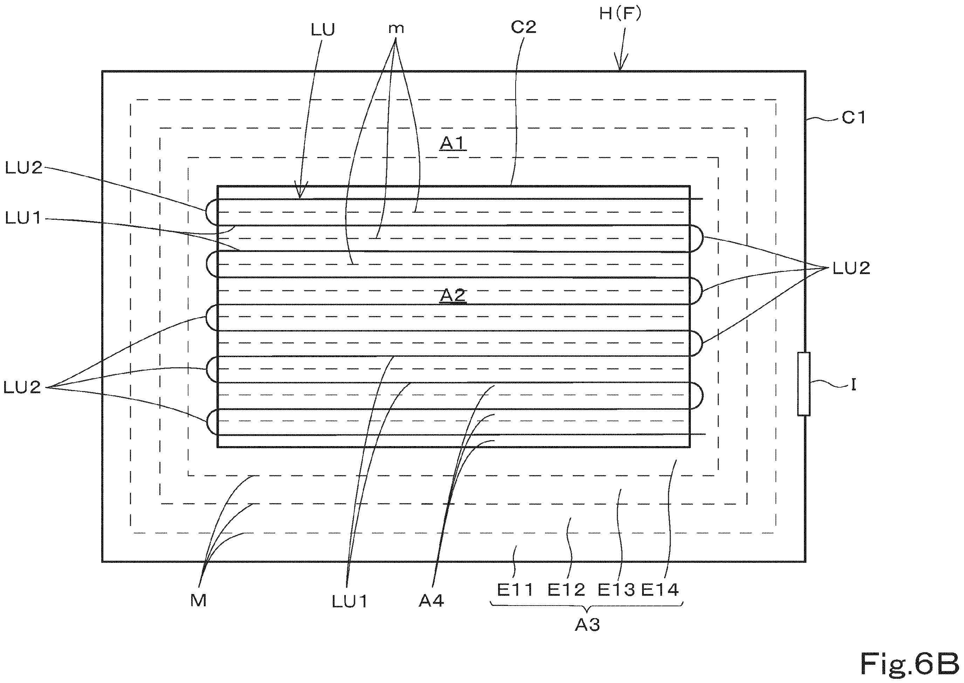

As illustrated in FIGS. 6A and 6B, the inner line LU includes straight portion(s) LU1 each connecting two ends in the longitudinal direction of the inner area A2, and curve portion(s) LU2 each connecting adjacent straight portions LU1. That is, the tractor 1 traveling along the inner line LU makes a turn at each curve portion LU2 to move from one straight portion LU1 to its adjacent straight portion LU1 , thus traveling back and forth between one end and the other end of the inner area A2.

As illustrated in FIG. 1, the line creator 52d includes a setting acquirer 53a, a first generator 53b, a second generator 53c, a third generator 53d, a work point setter 53e, a direction acquirer 53f, a fourth generator 53g, a fifth generator 53h, and a sixth generator 53i.

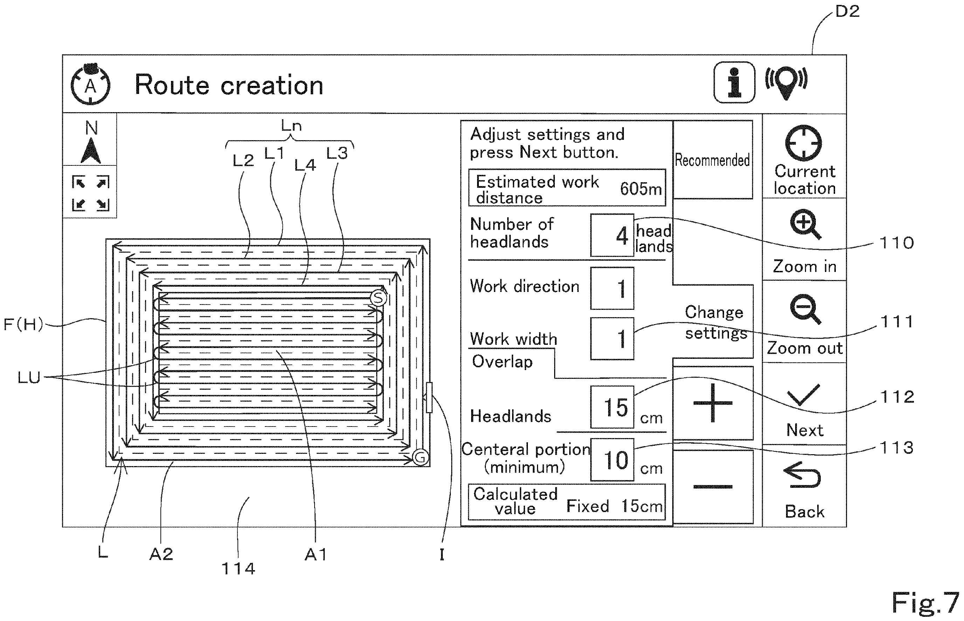

The setting acquirer 53a acquires setting information regarding the creation of the travel line(s) L. When the operator performs a predetermined operation on the display 50, as illustrated in FIG. 7, the display control unit 52 displays a setting screen D2. The setting screen D2 includes a number-of-headlands input box 110, a first width input box 111, a second width input box 112, a third width input box 113, and a route display section 114. The number-of-headlands input box 110 receives an input of the number of headlands. In the example illustrated in FIGS. 6A and 7, the number of headlands is four, and four paths are formed as loop lines Ln.

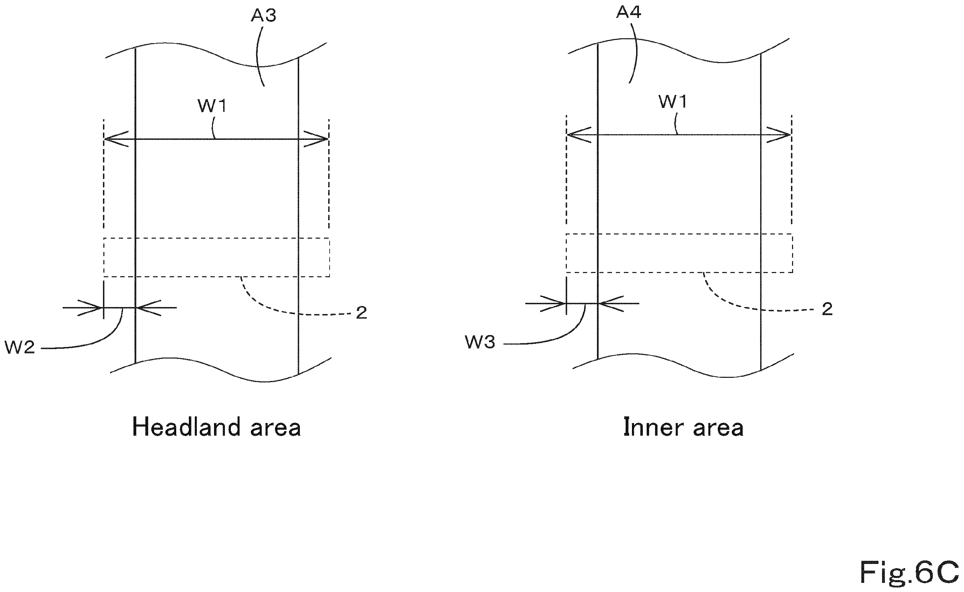

The first width input box 111 receives an input of the work width W1 of the working device 2. As illustrated in FIG. 6C, the work width W1 is a width over which the working device 2 performs work on the ground of the agricultural field H or the like (width over which work is done).

As illustrated in FIG. 6C, the second width input box 112 receives an input of the overlap width (first overlap width) W2, which is the width of overlap with an adjacent outer work zone A3 on the loop lines Ln. As illustrated in FIG. 6C, the third width input box 113 receives an input of the overlap width (second overlap width) W3, which is the width of overlap with an adjacent inner work zone A4 on the inner line LU.

The field F acquired by the field acquirer 52c is displayed in the route display section 114. In addition, the route display section 114 is capable of displaying the created travel line(s) L on the field F.

In the present embodiment, the setting acquirer 53a acquires information inputted on the setting screen D2 to acquire setting information regarding the creation of the travel line(s) L. However, the setting acquirer 53a may acquire information that is stored in the memory 54. The source for acquisition is not limited to the configuration described above.

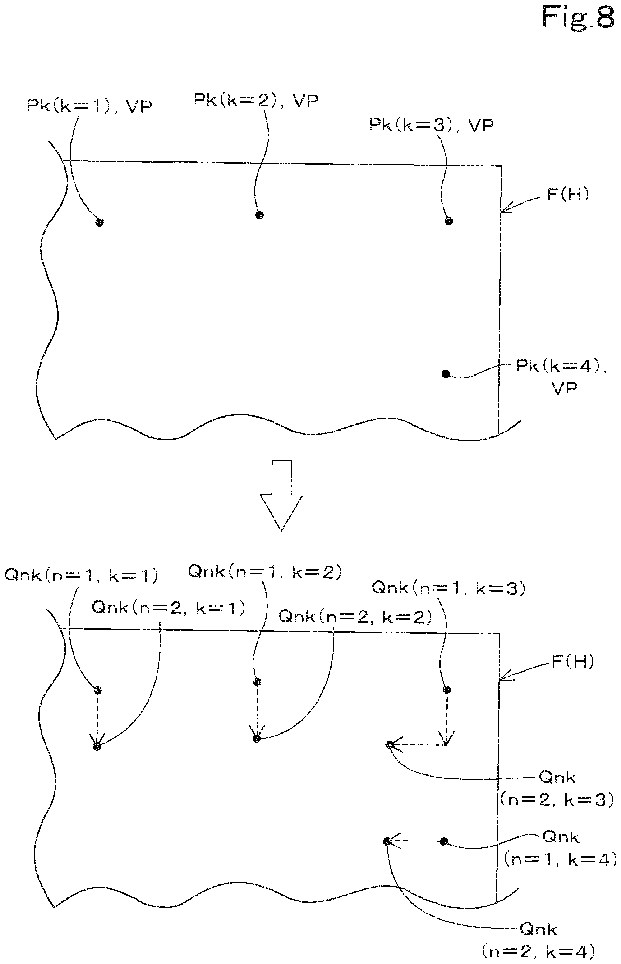

The first generator 53b associates a plurality of position measurement points Pk with the field F displayed by the display 50. In addition, as illustrated in FIG. 8, the first generator 53b generates a plurality of creation points Qnk in the field F by, for example, shifting the plurality of position measurement points Pk inward in the agricultural field H. Based on the plurality of position measurement points Pk acquired by the position acquirer 52a, the first generator 53b generates a plurality of creation points Qnk. In the present embodiment, the plurality of creation points Qnk include a plurality of position measurement points Pk and a plurality of creation points Qnk obtained by shifting the plurality of position measurement points Pk.

The plurality of creation points Qnk are reference points for generating the path of the loop line Ln. As illustrated in FIG. 8, based on the number of headlands and the shift width, the first generator 53b generates creation points Qnk for each of the headlands adjacent to each other (n = 1, 2, 3, ..., n). In the description below, terms "first creation points Q1k", "second creation points Q2k", "third creation points Q3k", ..., and "n-th creation points Qnk" counted in order from the outermost creation points Qnk toward the innermost loop line Ln will be used. The first creation points Q1k correspond to (are the same as) the plurality of position measurement points Pk. For example, if the number of headlands is four, the first generator 53b first generates the second creation points Q2k by shifting the plurality of position measurement points Pk (the first creation points Q1k) inward by the shift width. The first generator 53b generates the third creation points Q3k by shifting the plurality of position measurement points Pk inward by a width that is twice as great as the shift width, that is, by shifting the second creation points Q2k inward by the shift width. The first generator 53b generates the fourth creation points Q4k by shifting the plurality of position measurement points Pk inward by a width that is three times as great as the shift width, that is, by shifting the third creation points Q3k inward by the shift width.

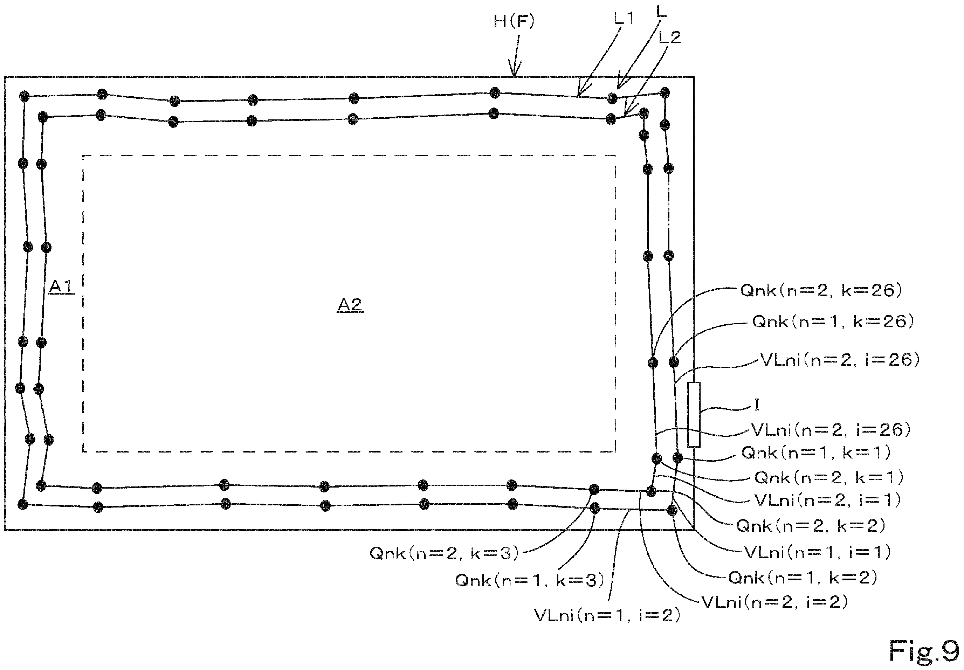

As illustrated in FIG. 9, the second generator 53c generates a plurality of connection lines VLni (n: headland number (loop number); n = 1, 2, 3, ..., n) (i: indicating a connection line; i = 1, 2, 3, ..., i) passing through the plurality of creation points Qnk generated by the first generator 53b and taken as the reference for generating the path of the loop line Ln. The second generator 53c generates each of the plurality of connection lines VLni by connecting adjacent ones of the plurality of creation points Qnk to each other.

The second generator 53c generates connection line(s) VLni passing through creation points Qnk for each of the headlands. That is, if the number of headlands is four, the second generator 53c creates connection lines VLni (the first connection line VL1i to the fourth connection line VL4i) each passing through corresponding ones of the first creation points Q1k to the fourth creation points Q4k. If the number of headlands is five, the second generator 53c creates connection lines VLni (the first connection line VL1i to the fifth connection line VL5i) each passing through corresponding ones of the first creation points Q1k to the fifth creation points Q5k.

The second generator 53c calculates a connection line VLni (in the present embodiment, i = k) connecting a creation point Qnk and its adjacent creation point Qnk+1. The adjacent creation point Qnk+1 mentioned here is the creation point Qnk adjacent to the creation point Qnk on the same headland number (the same loop).
For example, as illustrated in FIG. 9, the second generator 53c calculates a connection line VL11 connecting a creation point Q11 and its adjacent creation point Q12. Furthermore, the second generator 53c calculates a connection line VL22 connecting a creation point Q22 and its adjacent creation point Q23.

In the present embodiment, each connection line VLni is a straight line connecting adjacent creation points Qnk to each other. However, it is sufficient as long as the connection line VLni connects adjacent creation points Qnk to each other. The connection line VLni may be an arbitrary curve.

As illustrated in FIG. 6A, based on the innermost connection line VLni, the third generator 53d sets the headland area A1 and the inner area A2. Specifically, for example, the third generator 53d sets an inner borderline C2, which is a boundary M between the headland area A1 and the inner area A2, by shifting the innermost connection line VLni inward by a half of the shift width. The third generator 53d sets the area enclosed by the inner borderline C2 as the inner area A2, and sets the area between the outer borderline C1 and the inner borderline C2 as the headland area A1.

As illustrated in FIG. 6A, the work point setter 53e sets a work point Rn regarding a breakpoint in work performed by the working device 2 (n: headland numbers (loop number); n = 1, 2, 3, ..., n). The work point Rn is any one of a work start point, a work end point, a pause point, and a work preparation point of the working device 2. For example, the work point Rn is a point serving as a breakpoint in work when the tractor 1 moves from the currently located loop line Ln to the outside of the agricultural field H or to the adjacent loop line Ln. Based on a positional relationship between an entrance/exit I of the agricultural field H having been set on the setting screen D2, etc. in advance, the connection line VLni, and the creation points Qnk, the work point setter 53e sets the work point Rn such that the working device 2 will be able to perform work efficiently. The method for setting the work point Rn is not limited to the method described above. It may be configured such that any arbitrary position measurement point Pk is selectable on the setting screen D2 and such that the work point Rn is set based on the selected information.

The direction acquirer 53f acquires the direction in which the tractor 1 travels along the loop line Ln (traveling direction). The traveling direction is either a clockwise direction or a counterclockwise direction when the field F is viewed in plan. For example, based on the entrance/exit I of the agricultural field H having been set on the setting screen D2, etc. in advance and the work point Rn, and based on a predetermined determination criterion X, the direction acquirer 53f acquires the traveling direction. In such a case, based on the direction from the outermost work point Rn toward the entrance/exit I of the agricultural field H, the direction acquirer 53f acquires the traveling direction.

For example, in the case illustrated in FIG. 6A, the traveling direction is the counterclockwise direction because the entrance/exit I of the agricultural field H is located at a lower right position on the sheet face and because the work point Rn of the first loop line L1 is located below the entrance/exit I on the sheet face. The method for acquiring the traveling direction is not limited to the method described above. It may be configured such that an input of selecting either the clockwise direction or the counterclockwise direction as the traveling direction can be made on the setting screen D2 and such that the traveling direction is acquired based on the inputted information.

As illustrated in FIGS. 6A and 6B, the fourth generator 53g generates, inside the headland area A1, a plurality of unit work zones (outer work zones) A3 corresponding to the connection lines VLni and each having the same width as the shift width. The fourth generator 53g generates a pair of boundaries M parallel to a connection line VLni and located at a distance from each other, respectively on opposite sides of the connection line VLni in a direction intersecting with the connection line VLni.

The length between each of the pair of boundaries M and the connection line VLni is a half of the shift width. The length between one boundary M and the other, which make up the pair, is equal to the shift width. That is, as illustrated in FIG. 6B, the outer work zone A3 is an endless elongated area, and the connection line VLni goes through the center in the width direction of this area. The outer work zones A3 are located next to one another to correspond to the respective headlands. By this means, the fourth generator 53g generates the plurality of outer work zones A3 demarcated by the pairs of boundaries M.

If the number of headlands is four, the fourth generator 53g generates the outer work zones A3 (a first outer zone E11 to a fourth outer zone E14) corresponding respectively to the first connection line VL1i to the fourth connection line VL4i. If the number of headlands is five, the fourth generator 53g generates the outer work zones A3 (the first outer zone E11 to a fifth outer zone E15) corresponding respectively to the first connection line VL1i to the fifth connection line VL5i.

As illustrated in FIGS. 6A and 6B, the fifth generator 53h generates the inner line LU in an area (the inner area A2) located inward of the headland area A1. Based on, for example, the work point Rn of the innermost connection line VLni among the work points Rn set by the work point setter 53e, the fifth generator 53h generates the inner line LU. Specifically, as illustrated in FIGS. 6A and 6B, the fifth generator 53h sets the straight line portion LU1 connecting two ends in the longitudinal direction as the inner line LU. Moreover, the fifth generator 53h generates, as the inner line LU, each curve portion LU2 connecting two straight lines LU1 located next to each other in the headland area A1. The controller 60 controls the lifting device 8 and causes it to raise the working device 2 and thus to shift into a non-work attitude when the tractor 1 moving along the straight line portion LU1 arrives at the curve portion LU2. The controller 60 controls the lifting device 8 and causes it to lower the working device 2 and thus to shift into a work attitude when the tractor 1 moving along the curve portion LU2 arrives at the straight line portion LU1.

As illustrated in FIGS. 6A and 6B, the sixth generator 53i generates, inside the inner area A2, a plurality of unit work zones (inner work zones) A4 corresponding to the straight line portion LU1 and each having the same width as the shift width. The fifth generator 53h generates a pair of boundaries m parallel to the straight line portion LU1 and located at a distance from each other, respectively on one side and on the other side in a direction intersecting with the straight line portion LU1, with the straight line portion LU1 therebetween. Specifically, the length between each of the pair of boundaries m and the straight line portion LU1 is a half of the shift width. The length between one boundary m and the other, which make up the pair, is equal to the shift width. That is, as illustrated in FIG. 6B, the inner work zone A4 is an elongated area extending from one end toward the other of the agricultural field H, and the straight line portion LU1 goes through the center in the width direction of this area. By this means, the sixth generator 53i generates the plurality of inner work zones A4 demarcated by the pairs of boundaries m and the inner borderline C2.

As illustrated in FIG. 1, the traveling assistance system S for the tractor 1 includes a criterion creator 53j, a sequential order acquirer 53k, an area identifier 531, and a first setter 53m, and corrects the plurality of connection lines VLni generated by the second generator 53c to enable travel along the traveling line L including loop(s) in the agricultural field H and efficient work while avoiding entry into the area e2 where the tractor 1 is prohibited from entering. In the present embodiment, it is the line creator 52d that includes the criterion creator 53j, the sequential order acquirer 53k, the area identifier 531, and the first setter 53m. In addition, in the present embodiment, the criterion creator 53j, the sequential order acquirer 53k, the area identifier 531, and the first setter 53m include, for example, electric/electronic component(s), program(s) installed in the display 50, and/or the like.

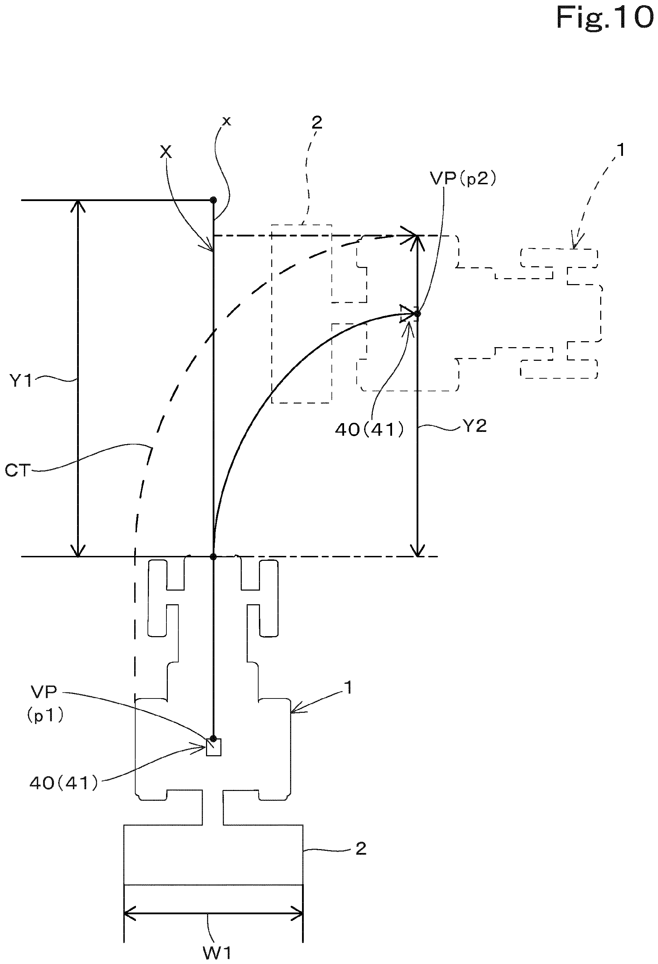

As illustrated in FIG. 10, based on the position of the tractor 1 detected by the position detector 40, the criterion creator 53j creates a determination criterion X that is located forward of the tractor 1 for determination about a turn of the tractor 1. More particularly, as illustrated in FIG. 10, the criterion creator 53j creates a determination criterion X at a position that is forward of the tractor 1 and outward of an outer periphery CT of a turning trajectory of the tractor 1. The determination criterion X is an imaginary line x extending forward of the tractor 1 from the position of the tractor 1 detected by the position detector 40. That is, the proximal end of the imaginary line x agrees with the position of the tractor 1, and said line extends forward through an area in front of the tractor 1. The length Y1 of the imaginary line x from the front of the tractor 1 to the distal end of the imaginary line x is approximately twice as large as the work width W1 of the working device 2.

That is, assume that, as illustrated in FIG. 10, the tractor 1 is located at a predetermined first position p1, and then the tractor 1 makes a turn from the first position p1 by an angle of 90° to move to a second position p2. When this example is assumed, as illustrated in FIG. 10, the length Y1 from the front of the tractor 1 to the determination criterion X is greater than the minimum turn radius Y2 of the outer periphery CT of the turning trajectory of the tractor 1, and the tractor 1 is located at a position closer to the first position p1 than the distal end of the imaginary line x drawn when at the first position p1 is. That is, the tractor 1 makes a turn behind the determination criterion X created when at the first position p1.

The determination criterion X is not limited to the imaginary line x, and may be any criterion for determining the distance between the tractor 1 and any arbitrary point, outer borderline C1, inner borderline C2, boundary M, area, etc. located forward of the tractor 1, for example, a point located forward of the tractor 1 or an area (detection area) having an any arbitrary shape.

The sequential order acquirer 53k acquires a sequential order of the unit work zones A3, A4 in which the tractor 1 actually performs work and moves. Based on information having been set on the setting screen D2, etc. in advance and a predetermined rule having been stored in the memory 54 in advance, the sequential order acquirer 53k acquires the sequential order of the unit work zones A3, A4 in which the tractor 1 moves. For example, the memory 54 contains a pre-stored rule that dictates a move from the innermost unit work zone (inner work zone) A4 sequentially to outer unit work zones (toward the first outer zone E11). In a case where, for example, a setting of the sequential order of the unit work zones A3, A4 in which the tractor 1 moves is to be made on the setting screen D2, it is possible to select the unit work zones A3, A4 displayed on the display unit 51 in any arbitrary sequential order by operating the display 50. For example, if the number of headlands is four, it is possible to select the unit work zones A3, A4 in the order of the inner work zones A4, the fourth outer zone E14, the second outer zone E12, the third outer zone E13, and the first outer zone E11 in this order.

The area identifier 531 identifies a first area e1 and a second area e2. The first area e1 is an area which is a first portion of the agricultural field H and in which the tractor 1 travels in a predetermined circumferential direction and the working device 2 performs work. The second area e2 is an area which is a second portion of the agricultural field H, which adjacent to the first area e1, and in which entry of the tractor 1 is prohibited in advance, for example, a unit work zone where the working device 2 has completed work (plowed area) in the agricultural field H. The second area e2 may be any area as long as the tractor 1 is prohibited in advance from entering it, and is thus not limited to a plowed area, and may be, for example, an area where an obstacle such as a pond, a rock, and/or the like is present in the agricultural field H.

In addition to the first area e1 and the second area e2, the area identifier 53l determines a third area e3. The third area e3 is an area which is a third portion of the agricultural field H, which is adjacent to the first area e1,and in which entry of the tractor 1 is permitted in advance. For example, the third area e3 is a unit work zone where the working device 2 has performed work yet (unplowed area) in the agricultural field H. The third area e3 may be an external road located around the agricultural field H, an adjacent agricultural field located next to the agricultural field H, or the like. The first to third areas e1 to e3 are set based on the sequential order of the unit work zones A3, A4 acquired by the sequential order acquirer 53k.

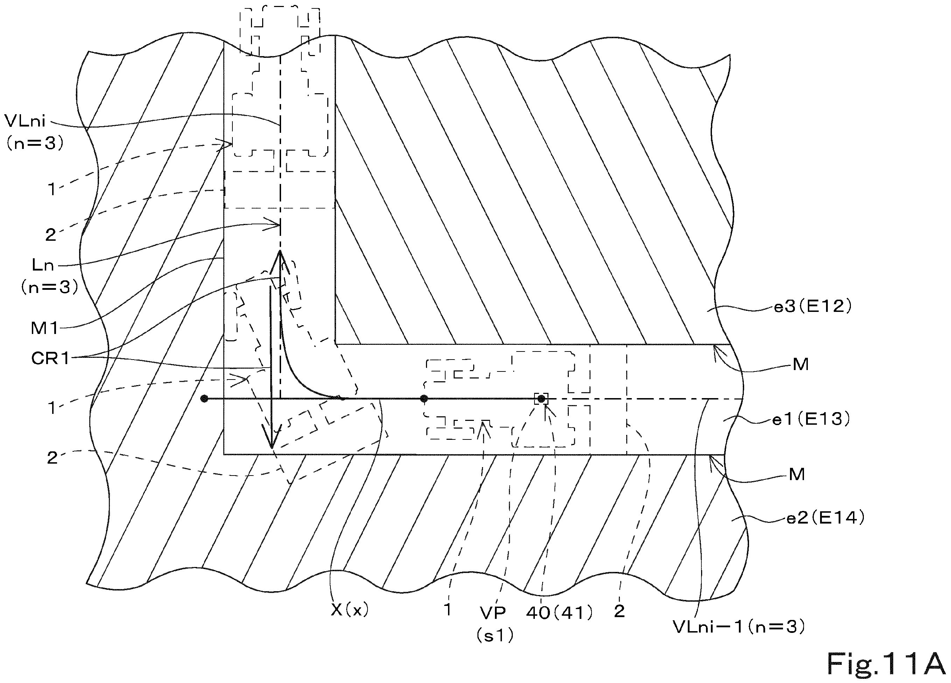

In a case where the determination criterion X is located in the second area e2, the first setter 53m sets a first turning portion CR1 at which the tractor 1 makes a turn, at a position between the tractor 1 and the second area e2 and in the first area e1, and corrects the connection line VLni. In a case where the determination criterion X is located in the third area e3, the first setter 53m sets a second turning portion CR2 at which the tractor 1 makes a turn, at a position in the third area e3 and forward of the tractor 1, and corrects the connection line VLni. In the present embodiment, each of the first turning portion CR1 and the second turning portion CR2 includes at least a path along which the tractor 1 makes a turn. Specifically, as illustrated in FIGS. 11A to 14, each of the first turning portion CR1 and the second turning portion CR2 includes a path along which the tractor 1 makes a turn and a path along which the tractor 1 moves back.

The first setter 53m sets the first turning portion CR1 and the second turning portion CR2 and corrects the connection between the connection line VLni (a first line VLni-1) and the connection line VLni (a second line VLni), which is connected to the first line VLni-1 and located next to the first line VLni-1 in the traveling direction, and sets again a path along which the tractor 1 makes a turn.

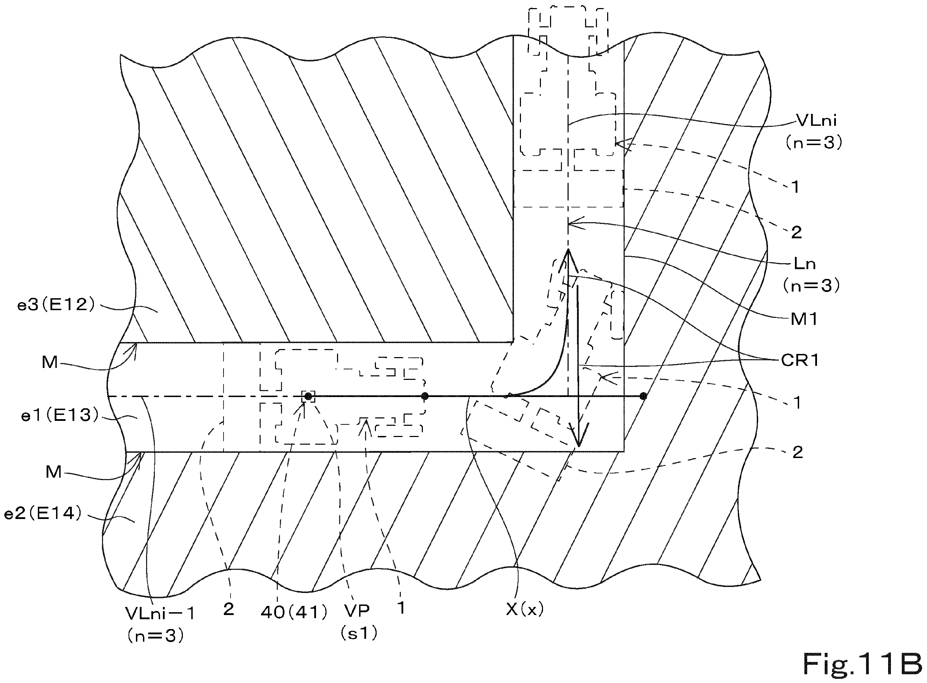

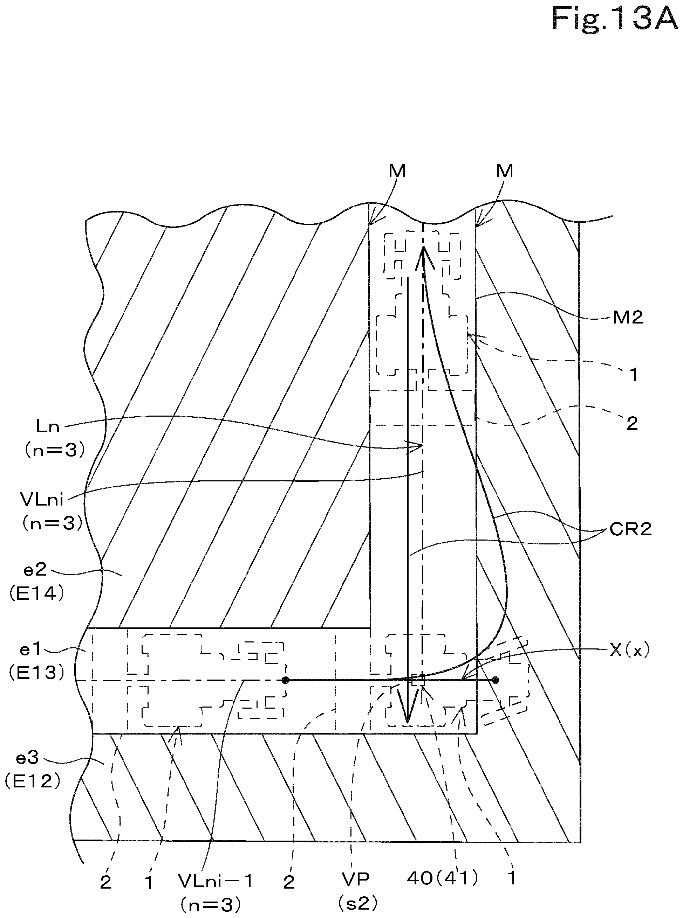

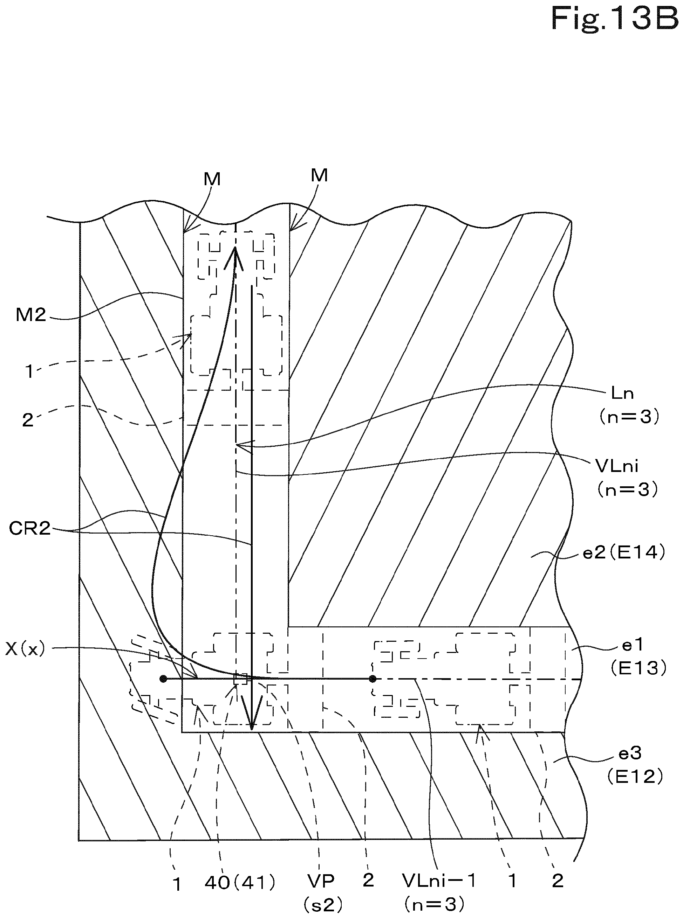

More particularly, in a case where a first boundary M1, which is the boundary M between the first area e1 and the second area e2, intersects with the imaginary line x, the first setter 53m sets the first turning portion CR1 at a position in the first area e1 and between the tractor 1 and the second area e2 such that the first turning portion CR1 is at least at a distance greater than the turn radius Y2 of the agricultural machine 1 from the second area e2. In a case where a second boundary M2, which is the boundary M between the first area e1 and the third area e3, intersects with the imaginary line x, the first setter 53m sets the second turning portion CR2 forward of the tractor 1, in the third area e3. As illustrated in FIGS. 11A and 11B, the first turning portion CR1 is a path along which the tractor 1 moves inside the first area e1 without entering the second area e2. As illustrated in FIGS. 13A and 13B, the second turning portion CR2 is a path along which the tractor 1 makes a turn and moves with an entry into the third area e3 so that there will be no zone left undone (zone where the working device 2 does not perform work) ERn (n: headland number (loop number); n = 1, 2, 3, ..., n) in the first area e1.

Specifically, the first setter 53m, based on the sequential order of the unit work zones acquired by the sequential order acquirer 53k and based on the direction acquired by the direction acquirer 53f (the traveling direction), runs a simulation of moving the determination criterion X (the imaginary line x) in the traveling direction along the connection line VLni corresponding to each unit work zone, and, based on the area (the unit work zone) determined by the area identifier 53l, detects whether the connection line VLni intersects with the boundary M (the first boundary M1 and the second boundary M2) or not when the connection line VLni is moved.

In the description below, with regard to association with the first to third areas e1 to e3, a case where the number of headlands is four and where the sequential order acquirer 53k acquires the unit work zones in the order of the inner work zones A4, the fourth outer zone E14, the third outer zone E13, the second outer zone E12, and the first outer zone E11 will be taken as an example.

First, the first setter 53m associates the fourth outer zone E14 with the first area e1, associates the inner work zones A4 with the second area e2, and associates the third outer zone E13 with the third area e3. The fourth outer zone E14, which is the first area e1, is located between the second area e2 and the third area e3. Therefore, the first setter 53m sets the second turning portion CR2 in the fourth outer zone E14, and sets the first turning portion CR1 in accordance with the shape of the fourth outer zone E14.

Next, the first setter 53m associates the third outer zone E13 with the first area e1, associates the fourth outer zone E14 with the second area e2, and associates the second outer zone E12 with the third area e3. The third outer zone E13, which is the first area e1, is located between the second area e2 and the third area e3. Therefore, the first setter 53m sets the second turning portion CR2 in the third outer zone E13, and sets the first turning portion CR1 in accordance with the shape of the third outer zone E13.

The first setter 53m associates the second outer zone E12 with the first area e1, associates the third outer zone E13 with the second area e2, and associates the first outer zone E11 with the third area e3. The second outer zone E12, which is the first area e1, is located between the second area e2 and the third area e3. Therefore, the first setter 53m sets the second turning portion CR2 in the second outer zone E12, and sets the first turning portion CR1 in accordance with the shape of the second outer zone E12.

Then, the first setter 53m associates the first outer zone E11 with the first area e1, and associates the second outer zone E12 with the second area e2. The first outer zone E11, which is the first area e1, is located outward of the second area e2. Therefore, the first setter 53m sets the first turning portion CR1 in accordance with the shape of the first outer zone E11.

In the description below, with regard to association with the first to third areas e1 to e3 when the first setter 53m sets the first turning portion CR1 and the second turning portion CR2, a case where the number of headlands is four and where the sequential order acquirer 53k acquires the unit work zones in the order of the inner work zones A4, the fourth outer zone E14, the second outer zone E12, the third outer zone E13, and the first outer zone E11 will be taken as an example.

First, the first setter 53m associates the fourth outer zone E14 with the first area e1, associates the inner work zones A4 with the second area e2, and associates the third outer zone E13 with the third area e3. The fourth outer zone E14, which is the first area e1, is located between the second area e2 and the third area e3. Therefore, the first setter 53m sets the second turning portion CR2 in the fourth outer zone E14, and sets the first turning portion CR1 in accordance with the shape of the fourth outer zone E14.

Next, the first setter 53m associates the second outer zone E12 with the first area e1, and associates the third outer zone E13 and the first outer zone E11 with the third area e3. The second outer zone E12, which is the first area e1, is located between the third area e3 and the third area e3. Therefore, the first setter 53m sets the second turning portion CR2 in the second outer zone E12.

The first setter 53m associates the third outer zone E13 with the first area e1, and associates the fourth outer zone E14 and the second outer zone E12 with the second area e2. The third outer zone E13, which is the first area e1, is located between the second area e2 and the second area e2. Therefore, the first setter 53m sets the first turning portion CR1 in accordance with the shape of the third outer zone E13.

Then, the first setter 53m associates the first outer zone E11 with the first area e1, and associates the second outer zone E12 with the second area e2. The first outer zone E11, which is the first area e1, is located outward of the second area e2. Therefore, the first setter 53m sets the first turning portion CR1 in the first outer zone E11.

With reference to FIGS. 11A and 11B, the setting of the first turning portion CR1 by the first setter 53m will be described below while taking an example of a case where the determination criterion X is moved along one connection line (the first line) VLni-1 corresponding to the first area e1 to result in that the determination criterion X is located in the second area e2, that is, a case of resulting in that the imaginary line x intersects with the first boundary M1. When the first setter 53m causes the determination criterion X to move along the first line VLni-1 to result in that the imaginary line x intersects with the first boundary M1, the first setter 53m sets the first turning portion CR1 for the imaginary line x drawn when at the vehicle-body position VP (a first origin s1) where the intersection of the imaginary line x with the first boundary M1 occurs. The starting point of the first turning portion CR1 agrees with the first origin s1. The first turning portion CR1 includes a path along which the tractor 1 makes a turn in a direction that is the opposite of the traveling direction from the first origin s1.

For example, in the example illustrated in FIG. 11A, the traveling direction acquired by the direction acquirer 53f is the counterclockwise direction, and the first setter 53m associates the third outer zone E13 with the first area e1, associates the fourth outer zone E14 with the second area e2, and associates the second outer zone E12 with the third area e3. In this case, the first setter 53m sets the first turning portion CR1 that includes a right-turn path.

On the other hand, in the example illustrated in FIG. 11B, the traveling direction acquired by the direction acquirer 53f is the clockwise direction, and the first setter 53m associates the third outer zone E13 with the first area e1, associates the fourth outer zone E14 with the second area e2, and associates the second outer zone E12 with the third area e3. In this case, the first setter 53m sets the first turning portion CR1 that includes a left-turn path.

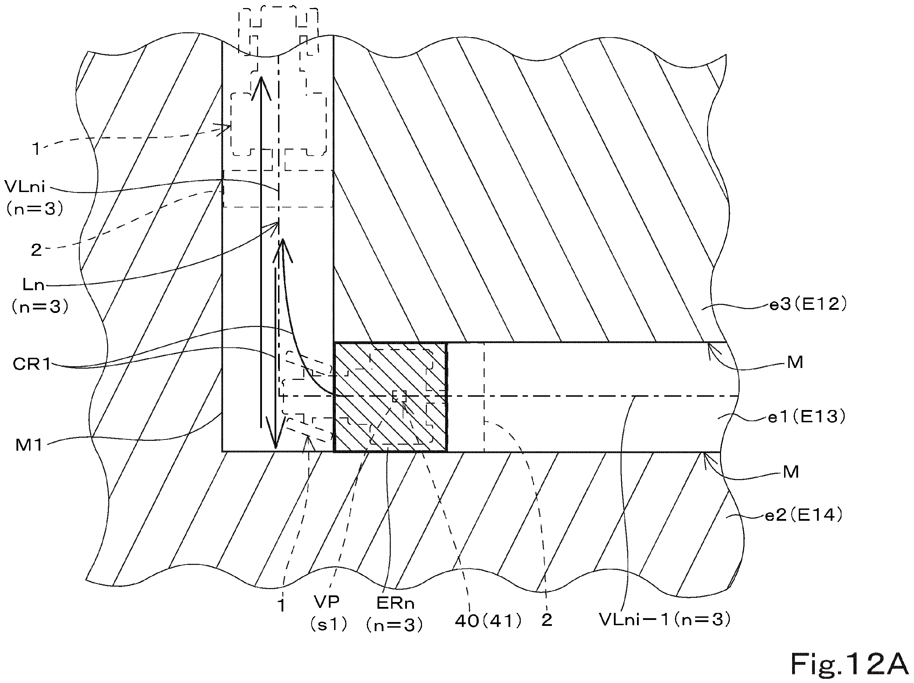

Among controls of the tractor 1 and the lifting device 8 by the automatic travel control unit 61, control on the path of the first turning portion CR1 will now be described in detail while taking FIG. 12A as an example. When the tractor 1 passes through the first origin s1 to start making a turn on the basis of the first turning portion CR1, first, the automatic travel control unit 61 stops the movement of the tractor 1 and controls the lifting device 8 and causes it to raise the working device 2 and thus to shift into a non-work attitude. After the work is paused by the shifting of the lifting device 8 into the non-work attitude, the automatic travel control unit 61 causes the tractor 1 to make a turn along the turning path of the first turning portion CR1 to move to the first area e1 corresponding to a second line V3ni. After the tractor 1 moves along the second line V3ni, the automatic travel control unit 61 causes the tractor 1 to move back. When the tractor 1 moves back to come to a position where the rear end of the working device 2 is in alignment with the boundary M located behind the tractor 1, the automatic travel control unit 61 causes the tractor 1 to stop and controls the lifting device 8 and causes it to lower the working device 2 and thus to shift into a work attitude. After the lifting device 8 shifts into the work attitude, the automatic travel control unit 61 causes the tractor 1 to move along the second line VL3i, thereby resuming the work.

Therefore, as illustrated in FIGS. 11A and 11B, setting the first turning portion CR1 and correcting the connection line VLni by the first setter 53m enables the tractor 1 to move, without entering the second area e2, from the first area e1 corresponding to one connection line (the first line) VLni-1 to the first area e1 corresponding to the next connection line (the second line) VLni.

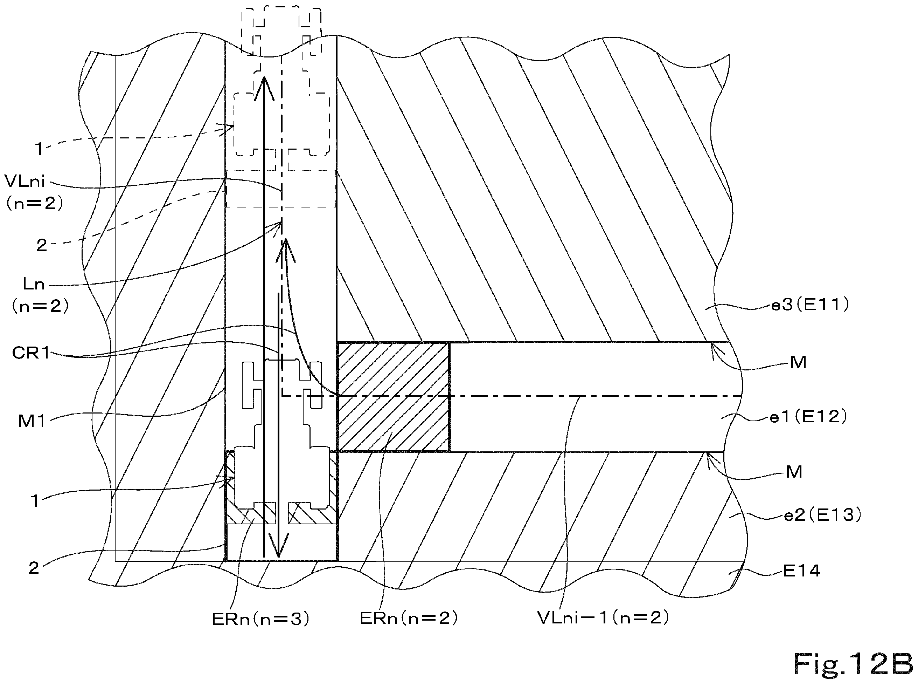

On the other hand, as illustrated in FIG. 12A, since the work is temporarily paused when the tractor 1 makes a turn, a zone where the working device 2 does not perform work (zone left undone) ERn is produced in the first area e1. In this case, for example, as illustrated in FIG. 12B, if the zone left undone ER3 is produced in the third outer zone E13, the first setter 53m sets the first turning portion CR1 such that at least a part of the work of the zone left undone ER3 is performed in the outer work zone A3 (the second outer zone E12) located outward of it adjacently.

Specifically, the first setter 53m associates the second outer zone E12 with the first area e1, and sets the first turning portion CR1 such that the tractor 1 makes a turn and moves from a first line VL2i-1 of the second outer zone E12 to a second line VL2i and the working device 2 moves back till reaching a zone left undone ER3. Work for the zone left undone ERn that is produced when performing work on the outermost work zone A3 may be performed by manual operation of the tractor 1 by the operator.

Next, with reference to FIGS. 13A and 13B, the setting of the second turning portion CR2 by the first setter 53m will be described below while taking an example of a case where the determination criterion X is moved along one connection line (the first line) VLni-1 to result in that the determination criterion X is located in the third area e3, that is, a case of resulting in that the imaginary line x intersects with the second boundary M2. When the first setter 53m causes the determination criterion X to move along the first line VLni-1 to result in that the imaginary line x intersects with the second boundary M2, the first setter 53m sets the second turning portion CR2. Specifically, as illustrated in FIG. 13A, the first setter 53m sets the second turning portion CR2 at the vehicle-body position VP (a second origin s2) when the front end of the working device 2 comes into alignment with, of the two boundaries M corresponding to the second line VL3i, one M that is the opposite of the second boundary M2. The second turning portion CR2 includes a path of making a turn toward the traveling direction from the second origin s2.

For example, in the example illustrated in FIG. 13A, the traveling direction acquired by the direction acquirer 53f is the counterclockwise direction, and the first setter 53m associates the third outer zone E13 with the first area e1, associates the fourth outer zone E14 with the second area e2, and associates the second outer zone E12 with the third area e3. In this case, the first setter 53m sets the second turning portion CR2 that includes a left-turn path.

On the other hand, in the example illustrated in FIG. 13B, the traveling direction acquired by the direction acquirer 53f is the clockwise direction, and the first setter 53m associates the third outer zone E13 with the first area e1, associates the fourth outer zone E14 with the second area e2, and associates the second outer zone E12 with the third area e3. In this case, the first setter 53m sets the second turning portion CR2 that includes a right-turn path.

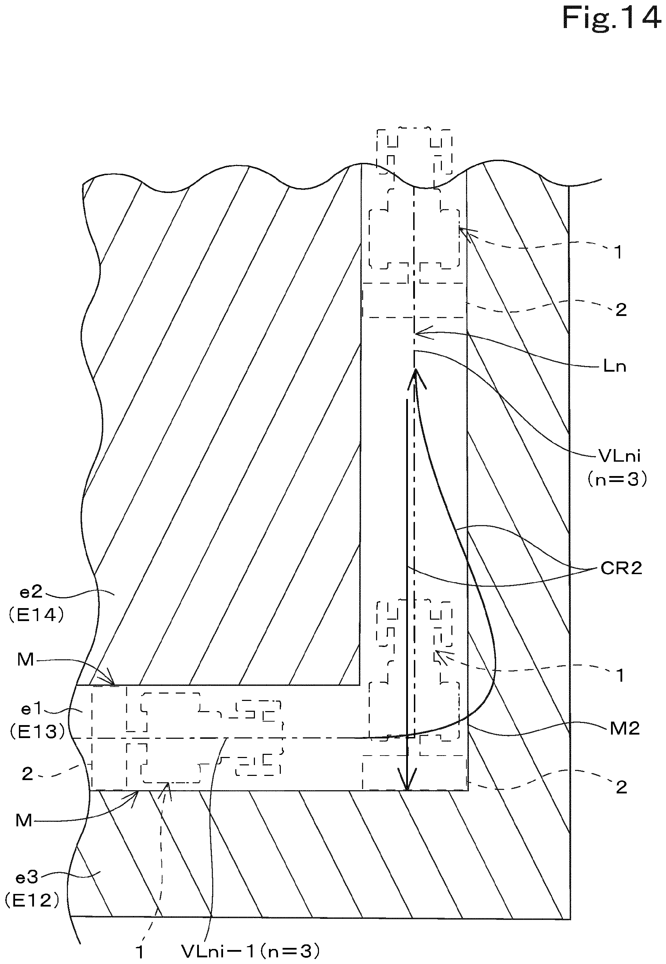

Among controls of the tractor 1 and the lifting device 8 by the automatic travel control unit 61, control on the path of the second turning portion CR2 will now be described in detail while taking FIG. 14 as an example. When the tractor 1 enters the third area e3 (the second outer zone E12) to become located at the second origin s2, the automatic travel control unit 61 stops the movement of the tractor 1 and controls the lifting device 8 and causes it to raise the working device 2 and thus to shift into a non-work attitude. After the work is paused by the shifting of the lifting device 8 into the non-work attitude, the automatic travel control unit 61 causes the tractor 1 to make a turn along the turning path of the second turning portion CR2 while passing through the second boundary M2 and performs a multipoint turn of the tractor 1. When the tractor 1 performing the multipoint turn comes to a position where the rear end of the working device 2 is in alignment with the rear boundary M, the automatic travel control unit 61 causes the tractor 1 to stop. After the tractor 1 stops, the automatic travel control unit 61 controls the lifting device 8 and causes it to lower the working device 2 and thus to shift into the work attitude. After the lifting device 8 shifts into the work attitude, the automatic travel control unit 61 causes the tractor 1 to move along the second line VL3i, thereby resuming the work.

Therefore, when the first setter 53m sets the second turning portion CR2, the tractor 1 is able to move from the first line VLni-1 to the second line VLni while entering the third area e3, and the working device 2 is able to perform work without producing the zone left undone ERn.

A second setter 53n extracts, from among the plurality of connection lines VLni, a predetermined pair of connection lines VLni-1 and VLni adjacent to each other and extending in different directions and defining an angle θnk not less than a criterion value, and extracts, as each candidate for a multipoint-turn portion QT, a creation point Qnk shared by the extracted predetermined pair of connection lines VLni-1 and VLni. The multipoint-turn portion QT is a portion where the automatic travel control unit 61 causes the tractor 1 to perform a multipoint turn. Among the extracted candidates for the multipoint-turn portion QT, the second setter 53n extracts those other than the creation points Qnk of the positions where the first turning portion CR1 and the second turning portion CR2 are set, and sets the multipoint-turn portion QT at the creation point Qnk that is the candidate for the multipoint-turn portion QT.

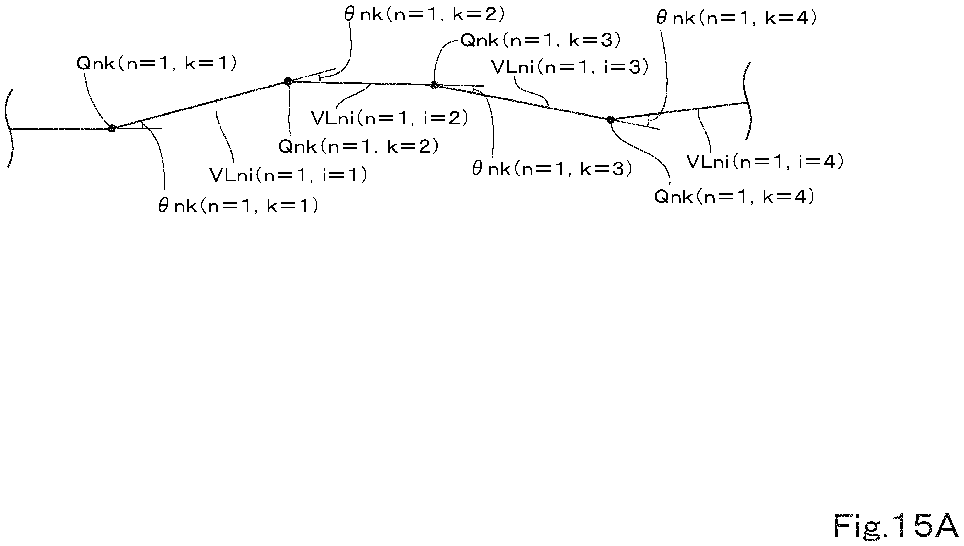

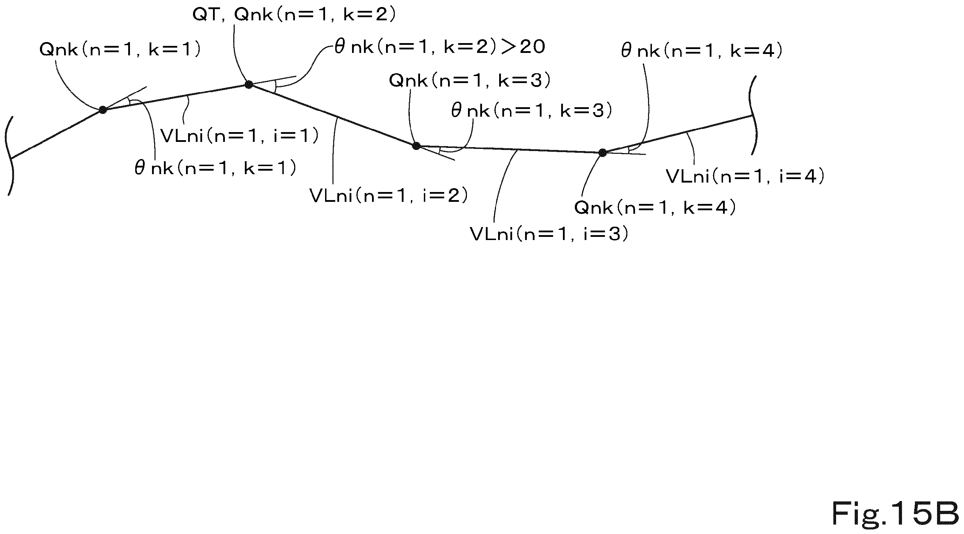

The creation point Qnk shared by the pair of connection lines VLni-1 and VLni mentioned here is the creation point Qnk common to "the creation point Qnk-1 and the creation point Qnk that are connected by the connection line VLni-1" and "the creation point Qnk and the creation point Qnk+1 that are connected by the connection line VLni". For example, as illustrated in FIGS. 15A and 15B, the creation point Qnk shared by a pair of connection lines VL11 and VL12 is a creation point Q12 common to "a creation point Q11 and the creation point Q12 that are connected by the connection line VL11" and "the creation point Q12 and a creation point Q13 that are connected by the connection line VL12".

The multipoint-turn portion QT is a portion where the tractor 1 performs a multipoint turn with an entry from the first area e1 into the third area e3 and without an entry into the second area e2. In a case where, for example, the multipoint-turn portion QT is set at the creation point Q12, as illustrated in FIG. 15B, when the tractor 1 moves along the connection line VL 11 to arrive at the starting point of the multipoint-turn portion QT, the automatic travel control unit 61 causes the tractor 1 to stop and causes the lifting device 8 to move up and thus to shift into the non-work attitude. After the shifting into the non-work attitude, the automatic travel control unit 61 causes the tractor 1 to perform right-turn forward traveling and left-turn rearward traveling repeatedly via the first area e1, the second boundary M2, and the third area e3 in such a way as to approach the connection line VL12.

In the present embodiment, the criterion value is 20°. In a case where there are a plurality of such pairs of connection lines VLni-1 and VLni, the second setter 53n checks whether or not an external angle θank (n: headland number (loop number), n = 1, 2, 3, ..., n) (k: indicating a creation point Qnk, k = 1, 2, 3, ..., k) formed by each pair of connection lines VLni-1 and VLni is not less than a predetermined criterion value, extracts a particular pair of connection lines VLni-1 and VLni whose external angle θank is not less than 20°, and sets the creation point Qnk that is shared by the extracted particular pair of connection lines VLni-1 and VLni as a candidate for the multipoint-turn portion QT.

That is, in the example illustrated in FIG. 15A, since a pair of connection lines VLni-1 and VLni forming an external angle θnk of not less than 20° does not exist, the second setter 53n does not set the multipoint-turn portion QT. By contrast, in the example illustrated in FIG. 15B, the external angle θ12 formed by the pair of connection lines VL11 and VL12 is not less than 20°. Accordingly, the creation point Qnk common to them is extracted as a candidate for the multipoint-turn portion QT. In this case, since the first turning portion CR1 and the second turning portion CR2 are not set at the candidate (the creation point Qnk) for the multipoint-turn portion QT, the second setter 53n sets the multipoint-turn portion QT. Though the criterion value is 20° in the present embodiment, the criterion value may be within a range from 15° to 25°, and is not limited to the value mentioned above.

The connection line VLni for which the first turning portion CR1 and the second turning portion CR2 have been set by the first setter 53m and the multipoint-turn portion QT has been set by the second setter 53n is generated as the loop line Ln for each of the headlands, and the loop line Ln and the inner line LU are stored as the traveling line L into the memory 54. At least the loop line Ln of the traveling line L stored in the memory 54 is displayed on the route display section 114 of the setting screen D2.

It has been taken as an example in the embodiment described above that the first setter 53m sets the first turning portion CR1 and the second turning portion CR2 and the tractor 1 travels autonomously along the traveling line L (the loop line Ln) that is based on the connection line VLni having been corrected by the first setter 53m. However, it is sufficient as long as the first setter 53m sets the first turning portion CR1 and the second turning portion CR2 on the basis of the determination criterion X and the first to third areas e1 to e3. The tractor 1 may be configured to travel in the agricultural field H autonomously and make turns on the basis of the first turning portion CR1 and the second turning portion CR2.

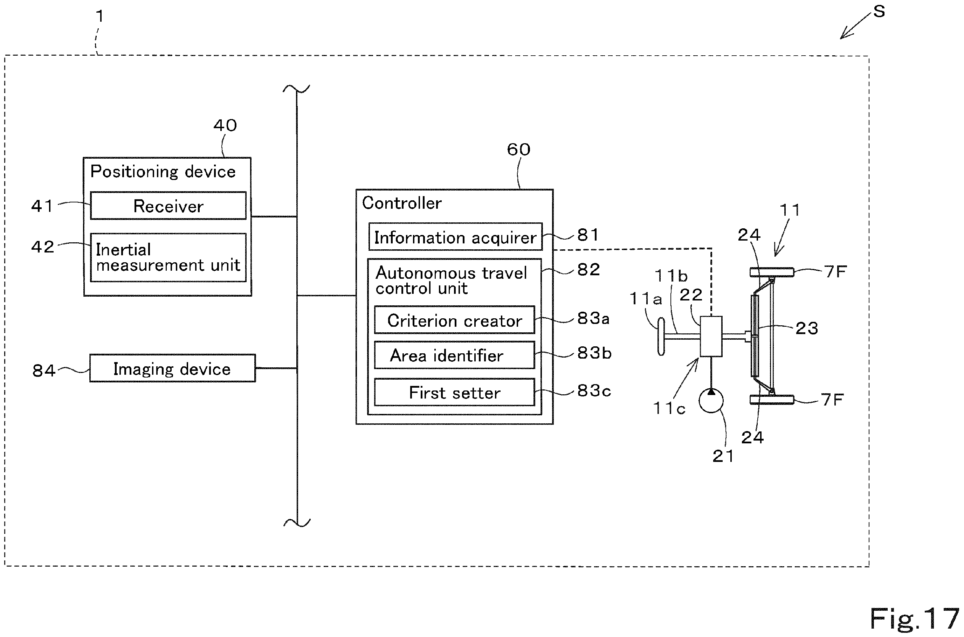

As illustrated in FIG. 17, the tractor 1 includes an information acquirer 81 that acquires visual/sound information, etc. near the tractor 1, and an autonomous travel control unit 82 that, based on the information acquired by the information acquirer 81, controls the tractor 1 and the lifting device 8 autonomously. In this case, the tractor 1 includes an imaging device 84 that captures an image of a surrounding area, and the information acquirer 81, also as which the controller 60 serves, acquires the image captured by the imaging device 84.

The autonomous travel control unit 82, also as which the controller 60 serves, includes a criterion creator 83a, an area identifier 83b, and a first setter 83c. More particularly, for example, the criterion creator 83a of the autonomous travel control unit 82 creates (projects) an imaginary determination criterion X (an imaginary line x) forward of the tractor 1 in an image captured forward of the tractor 1 (forward image) among images of the surrounding area captured by the imaging device 84. The area identifier 83b of the autonomous travel control unit 82 analyzes the forward image, and, based on the position of the tractor 1 detected by the position detector 40 and the result of the analysis, determines first to third areas e1 to e3, and creates (projects) a first boundary M1, which is a boundary M between the first area e1 and the second area e2, and a second boundary M2, which is the boundary M between the first area e1 and the third area e3, in the forward image.

Based on a positional relationship between the determination criterion X and the boundary M that have been projected onto the forward image, the first setter 83c sets the first turning portion CR1 and the second turning portion CR2. Based on the result of analyzing the captured image and the position of the tractor 1 detected by the position detector 40, the autonomous travel control unit 82 causes the tractor 1 to make turns at the first turning portion CR1 and the second turning portion CR2.

A traveling assistance system S for an agricultural machine 1 includes: a position detector 40 to detect a position of an agricultural machine 1 to which a working device 2 is attachable; a criterion creator 53j to, based on the position of the agricultural machine 1 detected by the position detector 40, create a determination criterion X located forward of the agricultural machine 1 for determination about a turn of the agricultural machine 1; an area identifier 53l to identify a first area e1 and a second area e2, the first area e1 being an area which is a first portion of an agricultural field H and in which the agricultural machine 1 travels in a predetermined circumferential direction and the working device 2 performs work, the second area e2 being an area which is a second portion of the agricultural field H, which is adjacent to the first area e1, and in which entry of the agricultural machine 1 is prohibited in advance; and a first setter 53m to, in a case where the determination criterion X is located in the second area e2, set a first turning portion CR1 at a position in the first area E1 and between the agricultural machine 1 and the second area e2, the first turning portion CR1 being a portion in which the agricultural machine 1 makes a turn. With the above configuration, the agricultural machine 1 is able to make a turn in the first area e1 without entering the second area e2 and perform work efficiently.

The determination criterion X is an imaginary line x extending forward of the agricultural machine 1 from the position of the agricultural machine 1 detected by the position detector 40. In a case where a first boundary M1 which is a boundary M between the first area e1 and the second area e2 intersects with the imaginary line x, the first setter 53m sets the first turning portion CR1 at a position in the first area e1 and between the agricultural machine 1 and the second area e2. With the above configuration, even if the first setter 53m has relatively low resolution, the first setter 53m is able to reliably detect that the determination criterion X is located in the second area e2. This further reduces the likelihood that the agricultural machine 1 will enter the second area e2.

The area identifier 53l identifies the first area e1 , the second area e2, and a third area e3 which is a third portion of the agricultural field H, which is adjacent to the first area e1, and in which the entry of the agricultural machine 1 is permitted in advance. In a case where the determination criterion X is located in the third area e3, the first setter 53m sets a second turning portion CR2 at a position in the third area e3 and forward of the agricultural machine 1, the second turning portion CR2 being a portion in which the agricultural machine 1 makes a turn. With the above configuration, since the agricultural machine 1 makes a turn while entering the third area e3 to reduce an area where work has not been done(such as an end portion of the first area e1), it is possible to perform work on the first area e1 efficiently.

The determination criterion X is an imaginary line x extending forward of the agricultural machine 1 from the position of the agricultural machine 1 detected by the position detector 40. In a case where a first boundary M1 which is a boundary M between the first area e1 and the second area e2 intersects with the imaginary line x, the first setter 53m sets the first turning portion CR1 at a position in the first area e1 and between the agricultural machine 1 and the second area e2. In a case where a second boundary M2 which is a boundary M between the first area e1 and the third area e3 intersects with the imaginary line x, the first setter 53m sets the second turning portion CR2 at a position in the third area e3 and forward of the agricultural machine 1. With the above configuration, even if the first setter 53m has relatively low resolution, the first setter 53m is able to reliably detect that the determination criterion X is located in the second area e2 or the third area e3. This makes it possible to enhance the precision of setting the first turning portion CR1 and the second turning portion CR2 by the first setter 53m and perform work on the first area e1 efficiently.

A length of the imaginary line x from a front of the agricultural machine 1 to a distal end of the imaginary line x is approximately twice as large as a work width W1 of the working device 2. With the above configuration, it is possible to eliminate or reduce the likelihood that the distal end portion of the imaginary line x will intersect with the portion of the first boundary M1 or the second boundary M2 that is other than the portion the first boundary M1 or the second boundary M2 that is located in front of the agricultural machine 1. This makes it possible to enhance the precision of setting the first turning portion CR1 and the second turning portion CR2 by the first setter 53m.

The second area e2 is an area where, in the agricultural field H, the working device 2 has completed work. With the above configuration, it is possible to improve work efficiency by eliminating or reducing the likelihood that the agricultural machine 1 will enter the area where work has been completed (plowed area) and roughen the plowed area.

The traveling assistance system S for an agricultural machine 1 further includes: a position acquirer 52a to acquire a plurality of position measurement points Pk of the agricultural machine 1 detected by the position detector 40; a display 50 to display a field F that represents the agricultural field H and display a plurality of creation points Qnk based on the position measurement points Pk on the field F; and a line creator 52d to create a traveling line L including a loop which passes through the plurality of creation points Qnk. The line creator 52d includes a line creator 52d to create a plurality of connection lines VLni each of which is a straight line connecting adjacent ones of the plurality of creation points Qnk on the traveling line L, and a second setter 53n to: extract, from the plurality of connection lines VLni, a predetermined pair of connection lines VLni-1, VLni adjacent to each other and extending in different directions and defining an angle θnk not less than a criterion value, and set, at one of the creation points Qnk that is shared by the extracted predetermined pair of connection lines VLni-1, VLni, a multipoint-turn portion QT where the agricultural machine 1 performs a multipoint turn. With the above configuration, even if the agricultural machine 1 is unable to make a turn sufficiently because it is limited as to the turn because of working by the working device 2 and therefore cannot trace the connection line VLni, since the agricultural machine 1 makes a turn at the multipoint-turn portion QT, the agricultural machine 1 is able to travel along the connection line VLni. Therefore, the agricultural machine 1 is able to perform work properly even on an agricultural field H that has a relatively complex external shape.

The criterion creator 53j creates the determination criterion X at a position that is forward of the agricultural machine 1 and outward of an outer periphery CT of a turning trajectory of the agricultural machine 1. With the above configuration, the first setter 53m sets the first turning portion CR1 at a position that is between the agricultural machine 1 and the second area e2 and is at least at a distance greater than the turn radius Y2 of the agricultural machine 1 from the second area e2. This further reliably reduces the likelihood that the agricultural machine 1 will enter the second area e2, and the agricultural machine 1 is thus able to make a turn in the first area e1.

An agricultural machine 1 includes the traveling assistance system S for an agricultural machine 1. With the above configuration, the agricultural machine 1 that achieves the above-described advantageous effects will be provided.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents. Reference Signs List

- 1: Tractor (agricultural machine)
- 2: Working device
- 50: Display
- 52a: Position acquirer
- 52d: Line creator
- 53j: Criterion creator
- 53l: Area identifier
- 53m: First setter
- 53n: Second setter
- CR1: First turning portion
- CR2: Second turning portion
- CT: Curve trajectory
- e1: First area
- e2: Second area
- e3: Third area
- F: Field
- H: Agricultural field
- M: Boundary
- M1: First boundary
- M2: Second boundary
- Pk: Position measurement point
- QT: Multipoint-turn portion
- Qnk: Creation point
- Rn: Work point
- S: Traveling assistance system
- Y2: Turn radius
- VLni: Connection line
- X: Determination criterion
- x: Imaginary line
- θnk: External angle

## Claims

1. A traveling assistance system for an agricultural machine, comprising:
a position detector to detect a position of an agricultural machine to which a working device is attachable;
a criterion creator to, based on the position of the agricultural machine detected by the position detector, create a determination criterion located forward of the agricultural machine for determination about a turn of the agricultural machine;
an area identifier to identify a first area and a second area, the first area being an area which is a first portion of an agricultural field and in which the agricultural machine travels in a predetermined circumferential direction and the working device performs work, the second area being an area which is a second portion of the agricultural field, which is adjacent to the first area, and in which entry of the agricultural machine is prohibited in advance; and
a first setter to, in a case where the determination criterion is located in the second area, set a first turning portion at a position in the first area and between the agricultural machine and the second area, the first turning portion being a portion in which the agricultural machine makes a turn.

2. The traveling assistance system according to claim 1, wherein
the determination criterion is an imaginary line extending forward of the agricultural machine from the position of the agricultural machine detected by the position detector, and
in a case where a first boundary which is a boundary between the first area and the second area intersects with the imaginary line, the first setter sets the first turning portion at a position in the first area and between the agricultural machine and the second area.

3. The traveling assistance system according to claim 1 or 2, wherein
the area identifier identifies the first area, the second area, and a third area which is a third portion of the agricultural field, which is adjacent to the first area, and in which the entry of the agricultural machine is permitted in advance; and
in a case where the determination criterion is located in the third area, the first setter sets a second turning portion at a position in the third area and forward of the agricultural machine, the second turning portion being a portion in which the agricultural machine makes a turn.

4. The traveling assistance system according to claim 3, wherein
the determination criterion is an imaginary line extending forward of the agricultural machine from the position of the agricultural machine detected by the position detector,
in a case where a first boundary which is a boundary between the first area and the second area intersects with the imaginary line, the first setter sets the first turning portion at a position in the first area and between the agricultural machine and the second area, and
in a case where a second boundary which is a boundary between the first area and the third area intersects with the imaginary line, the first setter sets the second turning portion at a position in the third area and forward of the agricultural machine.

5. The traveling assistance system according to claim 2 or 4, wherein
a length of the imaginary line from a front of the agricultural machine to a distal end of the imaginary line is approximately twice as large as a work width of the working device.

6. The traveling assistance system according to any one of claims 1 to 5, wherein
the second area is an area where, in the agricultural field, the working device has completed work.

7. The traveling assistance system according to any one of claims 1 to 6, further comprising:
a position acquirer to acquire a plurality of position measurement points of the agricultural machine detected by the position detector;
a display to display a field that represents the agricultural field and display a plurality of creation points based on the position measurement points on the field; and
a line creator to create a traveling line including a loop which passes through the plurality of creation points, wherein
the line creator includes
a line creator to create a plurality of connection lines each of which is a straight line connecting adjacent ones of the plurality of creation points on the traveling line, and
a second setter to:
extract, from the plurality of connection lines, a predetermined pair of connection lines adjacent to each other and extending in different directions and defining an angle not less than a criterion value, and
set, at one of the creation points that is shared by the extracted predetermined pair of connection lines, a multipoint-turn portion where the agricultural machine performs a multipoint turn.

8. The traveling assistance system according to any one of claims 1 to 7, wherein
the criterion creator creates the determination criterion at a position that is forward of the agricultural machine and outward of an outer periphery of a turning trajectory of the agricultural machine.

9. An agricultural machine, comprising:
the traveling assistance system according to any one of claims 1 to 8.
